(19) Europäisches Patentamt
European Patent Office
Office européen des brevets

(11) **EP 4 339 712 B1**

(12) **EUROPEAN PATENT SPECIFICATION**

(45) Date of publication and mention
of the grant of the patent:
**31.12.2025 Bulletin 2026/01**

(51) International Patent Classification (IPC):
**G03H 1/08** (2006.01)   **G03H 1/22** (2006.01)
**G02B 27/00** (2006.01)   **G02B 27/01** (2006.01)

(21) Application number: **23190164.6**

(22) Date of filing: **08.08.2023**

(52) Cooperative Patent Classification (CPC):
**G03H 1/2294; G02B 27/0081; G02B 27/0103;
G03H 1/0808;** G03H 2001/0816; G03H 2001/2239;
G03H 2001/2284; G03H 2223/16

(54) **OPTIMISED HOLOGRAM UPDATING**

OPTIMIERTE HOLOGRAMMAKTUALISIERUNG

MISE À JOUR OPTIMISÉE D'HOLOGRAMMES

(84) Designated Contracting States:
**AL AT BE BG CH CY CZ DE DK EE ES FI FR GR
HR HU IE IS IT LI LT LU LV MC ME MK MT NL NO
PL PT RO RS SE SI SK SM TR**

(30) Priority: **15.09.2022 GB 202213533**

(43) Date of publication of application:
**20.03.2024 Bulletin 2024/12**

(73) Proprietor: **Envisics Ltd.
Milton Keynes MK1 1PT (GB)**

(72) Inventors:
• **LIN, Ruisheng
Milton Keynes MK1 1PT (GB)**
• **SMEETON, Timothy
Milton Keynes MK1 1PT (GB)**
• **CHRISTMAS, Jamieson
Milton Keynes MK1 1PT (GB)**

(74) Representative: **Greenaway, Martin William
Apollo House
6 Bramley Road
Milton Keynes MK1 1PT (GB)**

(56) References cited:
**WO-A1-2011/114143     WO-A1-2022/167492
US-A1- 2021 055 691**

• **CHEN LIZHI ET AL: "Weighted iterative algorithm
for phase hologram generation with high-quality
reconstruction", SPIE PROCEEDINGS;
[PROCEEDINGS OF SPIE ISSN 0277-786X], SPIE,
US, vol. 11188, 18 November 2019 (2019-11-18),
pages 1118821 - 1118821, XP060127322, ISBN:
978-1-5106-3673-6, DOI: 10.1117/12.2537714**

**Description**

FIELD

The present disclosure relates to image projection. More specifically, the present disclosure relates to a diffractive structure, such as a hologram or kinoform, and method of determining, such as calculating or retrieving, the same. Some embodiments relate to real-time hologram calculation based on eye-tracking information. Some embodiments relate to virtual image projection. Some embodiments relate to projection of a real image. Embodiments relate to viewing a projected image through a waveguide. Some embodiments relate to a light engine such as a picture generating unit. Some embodiments relate to a head-up display.

BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example. A computer-generated hologram may be encoded on a spatial light modulator arranged to modulate the amplitude and/or phase of incident light. Light modulation may be achieved using electrically-addressable liquid crystals, optically-addressable liquid crystals or micromirrors, for example. A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD", and light detection and ranging, "LiDAR", for example.

WO2022/167492A1 discloses a diffractive structure arranged to spatially modulate light transformable by a viewing system into a target image, the diffractive structure configured to generate a plurality of discrete light patterns. Lizhi Chen, Hao Zhang, Liangcai Cao, and Guofan Jin "Weighted iterative algorithm for phase hologram generation with high-quality reconstruction", Proc. SPIE 11188, Holography, Diffractive Optics, and Applications IX, 1118821 (18 November 2019) discloses a weighted iterative algorithm that aims to improve holographic reconstruction quality by broadening the optimizing space of the calculated phase distribution. WO2011/114143A1 discloses an iterative algorithm for hologram design with multiple output image planes arranged in close proximity to create continuous patterns within an imaging volume. US2021/055691A1 discloses a holographic projector comprising an image processing engine, a hologram engine, a display engine and a light source.

SUMMARY

According to a first aspect, a method is provided. The method comprises determining, from a first hologram of an image, a second hologram of a portion of the image. The first hologram may be referred to as a first order sub-hologram or even first-order hologram for simplicity. The terms are used interchangeably herein. The first hologram may be a first order sub-hologram corresponding to a sub-region of a larger image, i.e. the image is itself a sub-region of a larger image. The second hologram may be referred to as a second order sub-hologram or even second-order hologram for simplicity. These terms are also used interchangeably herein. The portion of the image may be a limited or restricted portion of the image. The method comprises providing or receiving the first hologram of the image. The method further comprises propagating a complex (light) field corresponding to the first hologram from a hologram plane to an image plane. Propagating a complex (light) field in the context of the present application may comprise mathematically simulating the propagation of a light field corresponding to the first hologram using a mathematical transform such as a Fresnel transformation and/or Fourier transformation - as known in the art of Fourier optics. For example, the propagation involves performing a Fresnel and/or Fourier transformation of the first hologram to obtain a complex (light) field (i.e. array of complex numbers) that corresponds to an image. The method further comprises modifying (or changing or updating) amplitudes of the complex (light) field in the image plane by setting amplitude components of the complex (light) field that correspond to one or more regions of the image that are outside of the portion of the image to be zero. The method further comprises propagating the modified complex (light) field back from the image plane to the hologram plane thereby obtaining the second hologram of the portion of the image. In the context of the present application obtaining the second hologram can be considered to be extracting the phase values. For example, obtaining the second hologram may involve performing an inverse Fresnel and/or Fourier transformation on the modified complex (light) field in the image plane.

In another aspect, another method is provided. The method is of determining a hologram of an image for a system comprising a display device arranged to display a hologram and a viewing region arranged to view the hologram through a pupil expander providing a plurality of light propagation paths from the display device to viewing system. The method comprises, for a sub-region of an image, identifying a propagation path of a plurality of possible propagation paths from the display device to viewing system and performing a plurality of primary iterations of a phase-retrieval algorithm comprising transforming back and forth between the hologram plane and image plane, via the respective propagation path, in order to form a first-order sub-hologram corresponding to the sub-region of the image. The method further comprises performing a secondary iteration of the phase-retrieval algorithm in relation to a section of the sub-region, wherein the secondary iteration comprises: propagating a complex light field corresponding to the first-order sub-hologram from the hologram plane to the image plane, modification of the amplitude component in accordance with the amplitude of the section of the sub-region, and propagating back to the hologram domain to form a second-order sub-hologram.

Advantageously, the above methods provide a rapid way of determining (e.g.) updating holograms which are particularly useful when a portion of an image is changed and/or a technique such as shuttering of a holographic light field is required to avoid crosstalk between two eyes of a viewer in a hologram-to-eye system. In embodiments, the method comprises performing one more back-and-forth iteration of an iterative algorithm to calculate at least one sub-hologram from a primary hologram. This method saves many iterations of the algorithm in the cases described herein, and is particularly useful when there is a need or benefit to slicing and dicing (i.e. segmenting) an image in different ways.

The method disclosed herein may be applied in a system comprising a display device arranged to display the first hologram and a viewing system arranged to view the first hologram through a pupil expander providing a plurality of light propagation paths from the display device to the viewing system. Providing the first hologram may comprise identifying a propagation path of a plurality of possible propagation paths from the display device to the viewing system and performing a plurality of primary iterations of a phase-retrieval algorithm, the phase-retrieval algorithm comprises transforming back and forth between the hologram plane and the image plane, via the respective propagation path, in order to form the first hologram corresponding to the image. The steps of a first aspect may be a second iteration of the phase-retrieval algorithm and may only be performed once.

Each primary iteration of the plurality of primary iterations of the phase-retrieval algorithm may comprise: a first stage comprising determining a first complex light field at an entrance pupil of the viewing system, wherein the first complex light field results from the propagation of light of the image along at a light propagation path of a plurality of light propagation paths of the pupil expander and cropping in accordance with the entrance pupil of the viewing system; a second stage comprising determining a second complex light field at a sensor plane of a sensor of the viewing system, wherein the second complex light field results from the propagation of light of the first complex light field from the entrance pupil through a lens of the viewing system and modification of the amplitude component in accordance with the image; a third stage comprising determining a third complex light field at the entrance pupil, wherein the third complex light field results from the reverse propagation of light of the second complex light field from the sensor plane back through the lens and cropping in accordance with the entrance pupil; a fourth stage comprising determining a fourth complex light field at a display plane, wherein the fourth complex light field results from the reverse propagation of light of the third complex light field back along the at least one light propagation of the pupil expander and cropping in accordance with the display device; and extracting the first hologram from the fourth complex light field. The first to fourth stages are iteratively repeated before the step of extracting the first hologram from the final iteration, and the light propagated from the display device for the second and subsequent iterations comprises the phase distribution of the fourth complex light field of the immediately preceding iteration.

Propagating the complex light field corresponding to the first hologram from the hologram plane to the image plane comprises a Fresnel transformation and/or a Fourier transformation.

The portion of the image has a smaller field of view (i.e. size - more specifically, angular size or size in angular space) than the image. Advantageously, the present inventors have also recognized that having holograms of portions of an image with customizable fields of view tends to be desirable in many applications such as adapting to users with different interpupil distances (IPD), compensating for head tilt, and/or adapting head movement forward or backward. In the context of the present field, the field of view, FoV, equates to image size, i.e. the size of the image seen by a viewer of the holographic display system. It's usually measured by a vertical and horizonal angular range. More preferably, the field of view of the portion of the image is based on an interpupil distance, a pupil size, or both of a viewer. The interpupil distance and/or the pupil size may be determined by a sensor.

The modifying step and the propagating back to the hologram plane step may be performed for each respective portion of the image to determine a plurality of second holograms, where each second hologram is of a respective portion of the image, wherein respective portions of the image do not overlap with each other. The modifying step and the propagating back to the hologram plane step may be performed (e.g. only once) for each respective portion of the image. The plurality of second holograms may include a second hologram that has a field of view different from a field of view of another second hologram of the plurality of second holograms.

In some embodiments, the method provides a means to quickly and efficiently update or change a hologram to reflect an update or change to an image. In some examples, a holographic projector may be arranged to display a sequence of holograms of a sequence of images. Often, changes between subsequent images in the sequence may be relatively minor. For example, only a relatively small portion or portions of the image may change from one image to another while the remaining portion (or portions) of the image may remain the same. It may be the content of the image that is changing or staying the same. So, when a portion or portions of subsequent images is described as changing, the content contained in the portion or portions may change. When a portion or portions of subsequent images does not change, then the content contained in the portion or portions may be substantially constant. An example of this, in the context of a head-up display of a vehicle, is that the image to be displayed may comprise a virtual display panel displaying information including, for example, charge or fuel status, a digital speedometer, a current speed limit and directional information. In some instances, the only difference between two sequential images of the sequence may be a change or update in the speed displayed by the digital speedometer. The other information displayed by the virtual display panel may remain unchanged. The inventors have recognised that, when changes between sequential images in the sequence of images are relatively small (such as in the previously described example), the method according to the present disclosure can be used to quickly and efficiently update or change a hologram to compensate for the relatively small change in (the content of) the image to be displayed (e.g. a change in speed). The inventors have recognised that this method is advantageously much quicker and more efficient than recalculating the entire hologram from scratch for each image in a sequence of images to be displayed by holographic projection system.

As described above, the method may comprise obtaining a second hologram (from a first hologram of the image). When the method is for updating or changing a hologram (as described above), the first hologram may be a hologram of a first image. In other words, the above described image is a first image and the second hologram is a hologram of a portion of the first image. In such cases, the one or more regions of the (first) image that are outside of the portion of the image that the second hologram is determined for may correspond to one or more regions of the (first) image that are to be updated or changed. Setting the amplitudes of these one or more regions to be zero effectively removes these parts of the image from the hologram calculation such that the second hologram obtained by propagating the modified complex light field back to the hologram plane is a hologram of a portion of the (first) image absent of the one or more regions. For example, when the change / update is to a displayed speed, the one or more regions of (first) image may comprise at least a portion of a (digital) speedometer. The second hologram may be a hologram of a portion of the (first) image in which the portion of the speedometer is blank. This may correspond to a second image. In other words, the second hologram may be a hologram of a second image (corresponding to the portion of the first image).

According to the claimed invention, the method further comprises determining, from the second hologram, a third hologram of a third image. The third image is based on the first image but content in the one or more regions of the first image have been changed. In other words, the third image may be different to the first image (and the second image) in the one or more regions. Outside of the one or more regions, the first and third image may be substantially identical. For example, in the virtual display panel example described above, the first hologram may be of a first image comprising a (digital) speedometer showing 46 mph. The second hologram may be of second hologram which shows 4X mph (with "X" corresponding to a blank or empty region). A third image may be provided which is identical to the first image except the second image comprises the (digital) speedometer showing 47 mph (instead of 46 mph).

Determining the third hologram comprises propagating a second complex light field corresponding to the second hologram from the hologram plane to the image plane. Determining the third hologram further comprises modifying amplitudes of the second complex light field in the image plane by setting amplitude components of the second complex light field based on the third image. Determining the third hologram further comprises propagating the modified second complex light field back from the image plane to the hologram plane thereby obtaining the third hologram of the third image.

The inventors have found that, after a single iteration (of propagating back and forth between the hologram plane and image plane) as described above, the third hologram may be suitable for holographically reconstructing the third image and the reconstruction may comprise the new / changed / modified content in said one or more regions. However, the inventors have found that, in some examples, it may be possible for a user / viewer to distinguish between changed content and the unchanged content. For example, the reconstruction of the changed content may be of lower quality relative to the unchanged content and / or may appear dimmer. Thus, in some embodiments, the method may further comprise one or more optimization iterations after obtaining the third hologram. Each optimization iteration may comprise: receiving an input hologram; propagating a complex light field corresponding to the input hologram from the hologram plane to the image plane; modifying the amplitudes of the complex light field in the image plane by setting amplitude components of the complex light field based on the target corresponding to the third image; and then propagating the modified complex light field back from the image plane to the hologram plane to obtain an optimized third hologram. The inventors have found that the inclusion of just one or a few optimization iterations may substantially improve the (optimized) third hologram such that the appearance of differences between the quality of the unchanged and changed parts of a holographically reconstructed optimized third hologram are significantly reduced.

After thorough simulation and experimentation, the inventors have found that the number of optimization iterations needed to achieve said significant improvement is relatively low. For example, in some embodiments, the number of optimization iterations may be five or less, optionally three or less. The inventors have recognised that, even with the inclusion of a relatively small number of optimization iterations, the method according to the present disclosure is still significantly quicker and more efficient (using fewer iterations) than calculating a hologram from scratch each time (when there are relatively small changes in image content between sequential images).

In a first optimization iteration, the received input hologram may be the third hologram (obtained previously). If the method comprises further optimization iterations (i.e. a second iteration or greater), the received input hologram may be the optimized third hologram output in the previous optimization iteration. Importantly, the target image may be the same in each optimization iteration (i.e. the target image may be the third image in each iteration).

In another aspect, a method of determining, from a first hologram of a first image, a third hologram in which one or more portions of the image have been changed (e.g. updated or modified). The method comprises providing a first hologram of a first image. The method further comprises propagating a first complex light field corresponding to the first hologram from a hologram plane to an image plane. The method further comprises modifying amplitudes of the first complex light field in the image plane by setting amplitude components of the first complex light field that correspond to one or more region of the first image that are to be changed to be zero. As described in relation to the previous aspect, above, regions of the first image outside of said one or more regions may not be changed or updated. Said modifying step (modifying the first complex light field) may comprise not changing the amplitudes of the first complex light field in the image plane outside off said one or more regions (to be changed or updated).

The method further comprises propagating the modified first complex light field back from the image plane to the hologram plane thereby obtaining a second (or intermediate) hologram. The second hologram is a hologram of a first image which has been modified such that the one or more regions (to be changed / updated / modified) are empty. In other words, said one or more regions are blank or devoid of picture (or image) content. This contrasts with regions outside of said one or more regions which may contain content. Said content may be substantially the same as the corresponding content in the first image. Thus, the second hologram may be described as being a hologram of a second image. The second image may correspond to the first image except that, in said one or more regions (to be change / updated / modified), the second image is empty / blank / absent of (picture / image) content. It may be said that the second image comprises a portion (or portions) of the first image.

In some embodiments, the method further comprises propagating a second complex light field corresponding to the second hologram from the hologram plane to the image plane. In some embodiments, the method further comprises modifying amplitudes of the second complex light field of the second hologram in the image plane by setting amplitudes of the complex light field based on a target corresponding to a third image. The third image may be based on the first image but wherein content in said one or more regions of the first image have been changed (or updated or modified) in the third image (relative to the first image). Other than (or outside of) said one or more regions, the third image may be substantially the same as the first image. The (changed, updated or modified) one or more regions of the third image may comprise content. As above, the content of said one or more regions may be the same as the corresponding content of the first image. In other words, the (changed, updated or modified) one or more regions of the third image may not be empty.

In some embodiments, the method further comprises propagating the modified second complex light field back from the image plane to the hologram plane thereby obtaining a third hologram of the third image.

The inventors have recognised that the method according to the present aspect advantageously allows the first hologram of the first image to be updated in a fast and efficient manner. In particular, a (third) hologram of a (third) image in which one or more discrete regions of the image have been updated relative to the first image may be determined with a very small number of steps / iterations of a GS-type loop. For example, the (third) hologram may be determined from the first hologram using a first iteration in which a second (or intermediate) hologram is calculated and a second iteration in which the third hologram is calculated. This is significantly quicker and more efficient than recalculating a hologram from scratch for each image of a sequence of holograms (which, as the skilled person will be familiar, typically requires a relatively large number of GS-loop iterations). This is particularly advantageous in the context of real-time hologram calculations. For example, it may be desirable to display holograms of different images at a frame rate of at least 25 frames per second. In multi-colour holographic projectors, this may be repeated for each colour channel (e.g. for a red / green / blue projector, at least 75 holograms of different images may need to be displayed to achieve a frame rate of 25 frames per second). Calculating the hologram in real-time in such systems is, thus, computationally expensive. The above method being quicker and more efficient (by calculating holograms in relatively very few iterations) advantageously significantly reduces the computational power required to achieve real-time holography.

In some embodiments, the method may further comprise one or more optimization iterations after obtaining the third hologram. Each optimization iteration may comprise: receiving an input hologram; propagating a complex light field corresponding to the input hologram from the hologram plane to the image plane; modifying the amplitudes of the complex light field in the image plane by setting amplitude components of the complex light field based on the target corresponding to the third image; and then propagating the modified complex light field back from the image plane to the hologram plane to obtain an optimized third hologram. In a first optimization iteration, the received input hologram may be the third hologram (obtained previously). If the method comprises further optimization iterations, the received input hologram may be the optimized third hologram output in the previous optimization iteration.

In some embodiments, the number of optimization iterations may be five or less, optionally three or less.

In yet another aspect, another method is provided. The method is of forming a composite hologram of an image from a first hologram of the image. The method comprises performing on the first hologram the method of the previous paragraph to obtain a plurality of second holograms. The method further comprises summing the plurality of second holograms in the hologram domain to obtain the composite hologram. Advantageously, the inventors have recognized that having a composite hologram tends to be beneficial in dynamic holography, i.e. where the image changes. Such composite holograms can adapt to changes in the image relatively quickly since only the second holograms (sub-holograms) that correspond to the portion of the image that has changed need to be changed - and this sub-hologram can be changed rapidly. This saves on computational power and increases the speed in which a hologram of the updated image can be determined.

The method may further comprise receiving an update to at least a portion of the image, forming an updated second hologram based on the updated portion, identifying at least one of the second holograms that corresponds to the updated portion, replacing the identified second holograms in the plurality of second holograms with the updated second hologram to obtain an updated plurality of second holograms, and summing the updated plurality of second holograms to obtain an updated composite hologram.

In yet another aspect, a hologram engine is provided. The hologram engine comprises a processor, a storage medium storing processor-implementable instructions for controlling a processor to carry out the method any of preceding aspects, a display device configured to display at least the second hologram, and a pupil expander arranged such that the second hologram is viewable through the pupil expander.

In yet another aspect, a method is provided. The method is of controlling light propagation in a light engine, to form an image visible from a viewing window, wherein the light engine comprises a display device and a pupil expander. The method comprises performing the method of forming a composite hologram of an image from a first hologram of the image (as described above) to determine a composite hologram, wherein the composite hologram is of the image, displaying, on the display device, the composite hologram of the image, illuminating the display device to spatially modulate light in accordance with the composite hologram, wherein the composite hologram is configured to angularly distribute the spatially modulated light of the image in accordance with position of image content, such that angular channels of the spatially modulated light correspond with the respective portions of the image. Optionally, each of the angular channels may be formed from a respective second hologram. The method further comprises arranging the pupil expander to receive the spatially modulated light and to provide a respective plurality of different light propagation paths for the spatially modulated light from the display device to the viewing window. The method further comprises controlling propagation of the plurality of different light propagation paths using a control device disposed between the pupil expander and the viewing window, wherein the control device comprises at least one aperture. The step of controlling propagation of the plurality of different light propagation paths comprises configuring the control device so that a first viewing position within the viewing window receives a first channel of light spatially modulated by the composite hologram in accordance with a portion of the image (i.e. a viewer at the first viewing position would see a portion of the image) and a second viewing position within the viewing window receives, at the same time, a second channel of light spatially modulated by the composite hologram in accordance with another portion of the image (i.e. a viewer at the second viewing position would see another portion of the image). Furthermore, each of the viewing positions receives the first and second channels of light (i.e. all portions of the image in examples in which there are only two channels in the hologram domain per hologram). The difference between viewing positions is that different channels/portions arrive at each viewing position along different propagation paths. Advantageously, the hologram method of the present disclosure allows for precise adjustment of the width/FoV of different channels. This in turns means that adjustments (to the width of the different channels) can be made based on the user's IPD, so that different users with different IPDs can see the same image - without issues such as eye crosstalk. Similarly, adjustments (to the width of the different channels) can be made to compensate for head tilt of a specific user (i.e. for a specific IPD), so that the user tilting their head can still see the same image. Similarly, adjustments (to the width of the different channels) can be made to compensate for head movement, e.g. forward or backward, of a specific user (i.e. for a specific IPD), so that the user moving their head can still see the same image with a deterioration of image quality.

The method further comprises determining a width of the at least one aperture and wherein one of the second holograms has a field of view the same size as the width of the at least one aperture (in angular space).

The step of configuring the control device comprises allowing transmission of light through a first portion of the control device and preventing transmission of light through a second, different portion of the control device.

The pupil expander comprises a plurality of transmission points, and wherein each of the plurality of different light propagation paths is transmitted from a different respective transmission point.

The method further comprises i. identifying a first transmission point from which light of a first angular channel would propagate to the first viewing position, in the absence of the control device, ii. identifying a second, different transmission point from which light of the first angular channel would propagate to the second viewing position, in the absence of the control device, and iii. configuring the control device to block either a light path of the first angular channel to the first viewing position or a light path of the first angular channel to the second viewing position, at a selected time (t). Step (iii) comprises alternately blocking the light path of the first angular channel to the first viewing position and blocking the light path of the first angular channel to the second viewing position, during a selected time period.

In yet another aspect, a light engine is provided. The light engine is arranged to form an image visible from a viewing window. The light engine comprises a processor, a storage medium storing processor-implementable instructions for controlling a processor to carry out the method of any preceding aspect that obtains a composite hologram of the image, a display device arranged to display the composite hologram of the image and spatially modulate light in accordance with the composite hologram, wherein the composite hologram is configured to angularly distribute spatially modulated light in accordance with position of image content, such that angular channels of the spatially modulated light (in the hologram domain) correspond with respective portions of the image (in the image domain), a pupil expander arranged to receive the spatially modulated light and provide a plurality of different light propagation paths for the spatially modulated light from the display device to the viewing window, and a control device disposed between the pupil expander and the viewing window, wherein the control device comprises at least one aperture arranged such that a first viewing position within the viewing window receives a first channel of light spatially modulated by the composite hologram in accordance with a portion of the image and a second viewing position within the viewing window receives a second channel of light spatially modulated by the composite hologram in accordance with another portion of the image. One of the second holograms has a field of view corresponding to a width of the at least one aperture or less than the at least aperture.

The present disclosure and drawings generally show one-dimensional cases for ease of explanation and illustration. However, the person skilled in the art of optics will appreciate that the concepts described and shown may extend in two-dimensions to provide two dimensional images from two-dimensional holograms. For example, whilst only one dimensional pupil expansion may be described and shown, the reader should appreciate that the present disclosure extends to two-dimensional pupil expansion - e.g. using two one-dimensional pupil expanders in series.

Broadly, the present disclosure relates to image projection. It relates to a method of image projection and an image projector which comprises a display device. The present disclosure also relates to a projection system comprising the image projector and a viewing system. The present disclosure is equally applicable to a monocular and binocular viewing system. The viewing system may comprise a viewer's eye or eyes. The viewing system comprises an optical element having optical power (e.g. lens/es of the human eye) and a viewing plane (e.g. retina of the human eye/s). The projector may be referred to as a 'light engine'. The display device and the image formed (or perceived) using the display device are spatially separated from one another. The image is formed, or perceived by a viewer, on a display plane. In some embodiments, the image is a virtual image and the display plane may be referred to as a virtual image plane. The image is formed by illuminating a diffractive pattern (e.g. hologram) displayed on the display device.

The display device has a plurality of pixels. The pixels of the display device diffract light. In accordance with well-understood optics, the magnitude of the maximum diffraction angle is determined by the size of the pixels (and other factors such as the wavelength of the light).

In certain embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In certain embodiments, the image is a real image. In other embodiments, the image is a virtual image that is perceived by a human eye (or eyes). The projection system, or light engine, may thus be configured so that the viewer looks directly at the display device. In such embodiments, light encoded with the hologram is propagated directly to the eye(s) and there is no intermediate holographic reconstruction formed, either in free space or on a screen or other light receiving surface, between the display device and the viewer. In such embodiments, the pupil of the eye may be regarded as being the entrance aperture of the viewing system and the retina of the eye may be regarded as the viewing plane of the viewing system. It is sometimes said that, in this configuration, the lens of the eye performs a hologram-to-image conversion or transform.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g. any one eye position within a viewing window such as eye-motion box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g. 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the field of view - i.e., how to increase the range of angles of light rays that are propagated from the display device, and which can successfully propagate through an eye's pupil to form an image. The display device is (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels). The present disclosure relates to so-called direct view holography in which a hologram of an image is propagated to the human eye rather than the image itself. In other words, the light received by the viewer is modulated according to a hologram of the image.

The pupil expander increases the field of view and therefore increase the maximum propagation distance over which the full diffractive angle of the display device may be used. Use of a pupil expander can also increase the user's eye-box laterally, thus enabling some movement of the eye/s to occur, whilst still enabling the user to see the image. In embodiments, the pupil expander is a waveguide pupil expander. The present disclosure generally relates to non-infinite virtual image distances - that is, near-field virtual images. Aspects of the present disclosure are defined in the appended independent claims.

There is disclosed herein a method of determining a diffractive structure of an image for a system comprising a display device and viewing system. The diffractive structure may be a hologram and the term "hologram" is used henceforth merely as an example of a diffractive structure in accordance with this disclosure. The diffractive structure may be a phase hologram, phase-only hologram or kinoform. The display device is arranged to display the hologram. The viewing system is arranged to view the hologram through a pupil expander. The pupil expander provides a plurality of light propagation paths from the display device to the viewing system. The method comprises first to fifth stages. The first stage comprises determining a first complex light field at an entrance pupil of the viewing system. The first complex light field results from the propagation of light from a display plane of the display device along at least one light propagation path of the pupil expander. The first stage also comprises cropping in accordance with the entrance pupil of the viewing system. The second stage comprises determining a second complex light field at a sensor plane of a sensor of the viewing system. The second complex light field results from the propagation of light of the first complex light field from the entrance pupil through a lens of the viewing system. The second stage also comprises modifying the amplitude component in accordance with the image. The third stage comprises determining a third complex light field at the entrance pupil. The third complex light field results from the reverse propagation of light of the second complex light field from the sensor plane back through the lens. The third stage also comprises cropping in accordance with the entrance pupil. The fourth stage comprises determining a fourth complex light field at the display plane. The fourth complex light field results from the propagation of light of the third complex light field back along the at least one light propagation of the pupil expander. The fourth stage also comprises cropping in accordance with the display device. The hologram is extracted from the fourth data set. The first to fourth steps may be iteratively repeated. The hologram converges, and likely improves, with each iteration but does plateau. The method may stop when the hologram extractable from the fourth stage is deemed of acceptable quality or the rate of change with each iteration is below a threshold value or an allotted time has expired, for example. For the avoidance of doubt, the hologram that is extracted is the hologram for display on the display device.

More broadly, there is disclosed herein a method of calculating a hologram of an image, the method comprising at least one step including cropping in accordance with the entrance pupil of the viewing system to form a hologram that, when illuminated, forms spatially modulated light, wherein continuous light channels of the spatially modulated light correspond with continuous regions of the image. A continuous light channel may be defined by a continuous range of light ray angles of the spatially modulated light. All continuous light channels of the spatially modulated light correspond with a continuous region of the image. The spatially modulated light may be divided into any number of continuous light channels. In some embodiments, the light channels are non-overlapping.

In other embodiments - for example, those additionally including an optical combiner having optical power (e.g. vehicle windscreen) between the waveguide and viewer - some light channels may at least partially overlap. The method disclosed herein determines a diffractive structure arranged to spatially modulate light transformable by a viewing system into an image, wherein the diffractive structure is configured to route light into a plurality of hologram channels, each hologram channel corresponding to a different part of the image.

The term "reverse propagation" is merely used to reflect that the propagation direction of light in the third and fourth stages is different or substantially opposite to that in the first and second stages. In this respect, the light propagation in the first and second stages may be termed "forward propagation". In some embodiments, the "forward propagation" and "reverse propagation" are a mathematical inverse of each other.

The term "cropping" is used herein to refer to a process of selectively discarding information, such as light field information, outside an area or region of interest, such as outside a light aperture. In some embodiments, "cropping" is a data processing step comprises discarding data points, or zeroing data points or simply ignoring data points, outside the aperture.

Reference is made herein to a "complex light field". The term "light field" merely indicates a pattern of light having a finite size in at least two orthogonal spatial directions, $x$ and $y$. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field. In accordance with the method disclosed herein, the complex light field is propagated forward and back in the +z and -z directions between a hologram plane and an image plane. Light propagation can be simulated or modelled using any one of a number of different approaches or mathematical transforms familiar to the person skilled in the art of wave optics.

The inventors have devised a method of determining a hologram for a relatively small display device and projection over a relatively long distance, wherein the hologram is projected directly to the viewing system/s and the method is capable of implementation in real-time. The relatively small size of the display device and relatively long projection distance necessitate a pupil expander. The method devised by the inventors also addresses the optical complications introduced by using a pupil expander. The method yet further allows image content to appear at different distances from the viewing system/s and/or plural distances, optionally, at the same time - e.g. using one hologram. Yet further still, the method allows image content to appear downstream of the display device and upstream of the display device, optionally, at the same time - e.g. using one hologram.

Importantly, the hologram is propagated to the viewing system/s not a holographic reconstruction (i.e. image) formed from the hologram. It may be said that the spatially modulated light received by the viewing system/s is in the hologram domain rather than the spatial or image domain. It may also be said that the viewing system/s performs the hologram to image transform. More specifically, an optical element such as lens of each viewing system performs the transformation. In embodiments, a holographic reconstruction or image is not formed between the display device and viewing system/s. In some embodiments, a different hologram is calculated and propagated to each eye of a viewer, optionally, using an interlacing scheme.

The display device has an active or display area having a first dimension that may be less than 10 cm such as less than 5 cm or less than 2 cm. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as 10 less than 15 ms or less than 10 ms.

The methods disclosed herein form a hologram configured to route light into a plurality of channels, each channel corresponding to a different part (i.e. sub-area) of an image. The hologram may be represented, such as displayed, on a display device such as a spatial light modulator. When displayed on an appropriate display device, the hologram may spatially modulate light transformable by a viewing system into the image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram is described herein as routing light into a plurality of hologram channels merely to reflect that the image reconstructable from the hologram has a finite size and can be arbitrarily divided into a plurality of image sub-areas, wherein each hologram channel would correspond to each image sub-area. Importantly, the hologram of this disclosure is characterised by how it distributes the image content when illuminated. Specifically, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be arbitrarily divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels. However, in some embodiments, a plurality of spatially separated hologram channels is formed by intentionally leaving areas of the target image, from which the hologram is calculated, blank or empty (i.e. no image content is present).

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the crosssectional area of any hologram channel substantially corresponds to (i.e. is substantially the same as) the shape of the entrance pupil although the size may be different - at least, at the correct plane for which the hologram was calculated. Each light hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram, and the appended claims are set out accordingly.

There are many technical advancements provided by the method disclosed herein. Firstly, the method does not form ghost images that may be formed by other methods such as point cloud methods. This is because the method inherently ensures that the right image content gets to the right place by fully considering all possible light propagation paths in the waveguide. Secondly, the method can present image content at any depth plane unlike other methods such as point cloud methods which can be poor when the image point distance is very small. This is a significant problem in optical systems utilising an optical combiner having optical power - such as a vehicle windscreen - to form a virtual image. Thirdly, the method inherently accounts for the effects of wavelength such that in a colour projector comprising a plurality of single-colour holographic channels there is no need for image size correction by wavelength such as disclosed in US patent 10,514,658.

The different propagation paths may pass through the entrance aperture of the viewing system at a different angle. The pupil expander may be arranged so that all hologram channels are routed through the entrance aperture of the viewing system at any viewing position on a viewing plane. The pupil expander only routes each hologram channel via one propagation path to the viewing system for each permitted viewing position. At least two hologram channels of the plurality of hologram channels may be partially overlapping at the entrance aperture of the viewing system.

The first to fourth stages may be ordered stages. The method disclosed operates by projecting back and forth between the image plane and hologram, and the method may begin at the image plane or the hologram plane. The amplitude component of the light field after each propagation to the image plane or hologram plane is modified or constrained but the phase component is preserved. In some embodiments, the method starts with the first stage which equates to starting at the hologram plane. However, in other embodiments, the method starts with the third stage which equates to starting at the image plane. In these other embodiments, the third stage is followed by the fourth stage. The fourth stage is followed by the first stage and the first stage is followed by the second stage. Each stage may be performed once before hologram extraction or at least some stages may be performed a plurality of times before hologram extraction.

The at least one light propagation path may comprise the plurality of light propagation paths provided by the pupil expander. The structure of the pupil expander facilitates or enables a plurality of different possible light paths therethrough. The different possible light paths may be partially overlapping. In some embodiments, a series of different light paths are created by the pupil expander, wherein each light path in the series is a longer than the last. Each light path of the series exits the pupil expander at a different point on an exit surface thereof to create a corresponding series of light exit points or sub-areas. The series of light exits points or sub-areas may be substantially evenly spaced along the exit face of the pupil expander.

The pupil expander may be a waveguide pupil expander. Each light ray entering the pupil expander may be replicated a plurality of times. The pupil expander may be arranged to propagate light by a series of internal reflections and output light at a plurality of points along a primary face thereof. Each light propagation path may be defined by the number of internal reflections within the waveguide associated with that light propagation path. For example, a first light propagation path may comprise zero internal reflections and therefore corresponds to light that passes directly through the waveguide. For example, a second light propagation path may comprise two internal reflections before exiting the waveguide - namely, a first reflection at a first primary/reflective surface of the waveguide and a second reflection at a second primary/reflective surface of the waveguide, wherein the second primary/reflective surface is opposite or complementary to the first primary/reflective surface. For the avoidance of doubts, the light propagation paths therefore have some overlap. In other examples, a first light propagation path comprise one reflection and the second light propagation path comprises three reflections. The first light propagation path may be the shortest light propagation path and the nth light propagation path may be the longest light propagation path. The different propagation paths may pass through the entrance aperture of the viewing system at a different angle.

The at least one light propagation path may be only one of the plurality of light propagation paths provided by the pupil expander. The first to fourth stages may be carried out for each light propagation path of the plurality of light propagation paths in order to extract a hologram for each light propagation path. The first to fourth stages may be independently carried out for each light propagation path. The plurality of holograms corresponding to the plurality of light propagation paths may be combined in order to form the hologram for display on the display device.

Notably, the method accounts for the plurality of light propagation paths through the waveguide by performing the first to fourth steps (regardless of the starting point) for each light propagation path. The first to fourth steps may be carried out for each propagation path in turn. Alternatively, the first step may be carried out for each propagation path then the second step for each propagation path then the third and so on. It be appreciated that because of the partial overlap of the different propagation paths, the steps performed in relation to the nth propagation path may reuse calculations in relation to the n-1 propagation path, wherein the nth propagation path is next longest propagation path after the n-1 propagation path. The plurality of holograms respectively determined for the plurality of different light propagation path may be combined by addition - particularly if the holograms are phase or phase-only holograms.

The light propagated from the display plane in the first stage may comprise a zeroth complex light field having a phase component that is random, a quadratic function or a sampled quadratic function. The amplitude component of the zeroth complex light field may be equal to that of the illuminating beam. In some embodiments, the amplitude of the zeroth complex light field is unity. If the method starts with the first stage, the phase component of the zeroth complex light field may be random. The random phase distribution is sometimes referred to as a random phase seed and may be used merely as a starting point for the method when it begins at the hologram plane (i.e. first stage).

The first to fourth stages may be iteratively repeated before the step of extracting the hologram from the final iteration. The light propagated from the display device for the second and subsequent iterations may comprise the phase distribution of the fourth complex light field of the immediately preceding iteration.

If further iterations of the first stage are performed before the method is stopped (i.e. the hologram is acceptable), the phase component from the fourth step is conserved or retained or carried forward. That is, the phase component of complex light field that propagated to the display plane in accordance with the first stage is equal to that of the fourth complex light field.

The hologram may be the phase component of the fourth data set. The hologram may be the phase component of the fourth data set of the final iteration or stage of the method. In some embodiments, the hologram is a kinoform or phase hologram or phase-only hologram. The amplitude component of the fourth complex light field may be discarded.

The hologram may be a hologram of a plurality of images. Each image may have a different image distance. The second stage of the method may be independently carried out for each image. Importantly, the method disclosed herein forms a hologram that can form image content on multiple planes at the same time. This is achieved by carrying out the second stage for each different plane and the combining the results - for example, by summing the complex light fields together. Each image may be a real image or a virtual image. Image content may be visible in front of the display device - i.e. downstream of the display device - and/or behind the display device - i.e. upstream of the display device.

Each complex light field is determined by wave propagation optics such as Fresnel propagation, shifted Fresnel propagation, fractional Fresnel propagation, fractional Fourier Transform or scaled Fast Fourier Transform.

Modification of the amplitude component of the second stage may comprise replacing the amplitude component of the second complex light field with that of the image or weighting the amplitude component of the second complex light field based on the amplitude component of the image.

Each step of cropping may comprise cropping the complex light field in accordance with at least one of the size and position of the corresponding pupil. At least one of the size and position of the entrance pupil may be determined by tracking or monitoring the viewing system or receiving information about the viewing system. In embodiments in which the viewing system is an eye, the method may comprise eye tracking or head tracking. The first to fourth stages disclosed herein may be repeated if at least one property of the entrance pupil - such as position or size - changes.

The, or each, image may be a virtual image. The, or each, image may appear to the viewing system to be behind or beyond the display device. That is, the image distance from the viewing system to the perceived image may be greater that the distance from the viewing system to the display device. However, in other embodiments, image content is additionally or alternatively formed downstream of the display 5 device - that is, between the display device and viewing system/s.

The viewing system may be an eye of a viewer. The method may further comprise eye or head tracking the viewer in order to determine at least one of the size and position of the entrance pupil of the viewing system. In some embodiments, the size and/or position of the entrance pupil/s of the viewing system/s is used as part of the method to determine the hologram. In some embodiments, the method is performed in real-time - e.g. video rate - and the hologram is redetermined, such as recalculated, if the viewer moves or e.g. ambient light conditions change affecting the size of the entrance pupil of the viewer.

Propagation along each light propagation path provided by the pupil expander may comprise combining the individual complex light fields of the respective individual light propagation paths. The individual complex light fields may be combined by addition. Each light propagation path of a plurality of different light propagation paths provided by the pupil expander is considered individually. The complex light field formed by each light propagation path is individually determined.

The pupil expander may be a waveguide pupil expander. Each light propagation path corresponds to a different number of internal reflections within the waveguide. In some embodiments, the pupil expander is a waveguide pupil expander having a substantially one dimensional (i.e. elongate) or two-dimensional shape (e.g. substantially planar such as slabshaped).

In embodiments, the exit pupil is expanded in a long direction or dimension of the component. The pupil expander may comprise a pair of opposing or complementary reflective surfaces. One of these surfaces may be only partially reflective to allow the light to escape at the series of light exit points or sub-areas.

Combining the individual complex light fields may comprise determining a lateral position of each individual complex light field on a plane containing the entrance pupil. The number of internal reflections within the waveguide determines the lateral position.

Combining the individual complex light fields may further comprise determining a total phase shift associated with the internal reflections of each light propagation path. This may comprise summing a plurality of phase shifts associated with each light propagation path, wherein each phase shift results from a reflection within the pupil expander.

There is also disclosed herein a hologram engine arranged to determine a hologram of an image for viewing using a head-up display. The head-up display comprises a display device and a pupil expander. The head-up display is configured to operate with at least one viewing system. Each viewing system comprises an entrance pupil on an entrance pupil plane, lens on a lens plane and a sensor on a sensor plane. The head-up display may be configured to operate with a pair of viewing systems such as a pair of eyes. The display device (e.g. spatial light modulator) is arranged to display the hologram. The pupil expander is arranged to receive light spatially modulated in accordance with the hologram. For example, the displayed hologram may be illuminated with at least partially coherent light from a source. The display device spatially modulates the received light in accordance with the displayed hologram. The hologram engine is arranged to determine a first complex light field at the entrance pupil of a viewing system. The first complex light field results from the propagation of light from a display plane of the display device along each light propagation path of the pupil expander. The first complex light field further results from cropping in accordance with the entrance pupil of the viewing system. The hologram engine is further arranged to determine a second complex light field at a sensor plane of a sensor of the viewing system. The second complex light field results from the propagation of light of the first complex light field from the input pupil through a lens of the viewing system. The second complex light field further results from modification of the amplitude component in accordance with the image. The hologram engine is yet further arranged to determine a third complex light field at the entrance pupil. The third complex light field results from the propagation of light of the second complex light field from the sensor plane back through the lens. The third complex light field further results from cropping in accordance with the entrance pupil. The hologram engine is further still arranged to determine a fourth complex light field at the display plane. The fourth complex light field results from the propagation of light of the third complex light field back along each light propagation of the pupil expander. The fourth complex light field further results from cropping in accordance with the display device. The hologram engine is arranged to extract the hologram from the fourth data set. The hologram engine may be embodied in a display driver such as a field programmable gate array, "FPGA", or application-specific integrated circuit, "ASIC". The display driver may be part of a picture generating unit, "PGU", for a head-up display, "HUD".

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2) which represents the amount of phase retardation provided by that pixel. For example, a pixel of the spatial light modulator described as having a phase value of will retard the phase of received light by radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

## BRIEF DESCRIPTION OF THE DRAWINGS

Specific embodiments are described by way of example only with reference to the following figures:

Figure 1 is a schematic showing a reflective SLM producing a holographic reconstruction on a screen;

Figure 2A illustrates a first iteration of an example Gerchberg-Saxton type algorithm;

Figure 2B illustrates the second and subsequent iterations of the example Gerchberg-Saxton type algorithm;

Figure 2C illustrates alternative second and subsequent iterations of the example Gerchberg-Saxton type algorithm;

Figure 3 is a schematic of a reflective LCOS SLM;

Figure 4 shows angular content of a virtual image effectively propagating from a display device towards an aperture;

Figure 5A shows a viewing system with a relatively small propagation distance;

Figure 5B shows a viewing system with a relatively large propagation distance;

Figure 6A shows a viewing system with a relatively large propagation distance, which includes a waveguide, for forming a virtual image at infinity;

Figure 6B shows a magnified view of the optical paths of Figure 6a;

Figure 7 shows the optical system in accordance with embodiments; and

Figure 8 is a flowchart showing the steps of a method in accordance with embodiments.

Figure 9 is a schematic illustration of an example image;

Figures 10A-10F each depict respective portions of the image of Figure 9, in accordance with embodiments;

Figure 11 is a flowchart showing the steps of a method in accordance with embodiments;

Figure 12 is a first image used in the method of Figure 11;

Figure 13 is a second image used in the method of Figure 12;

Figure 14 is a third image used in the method of Figure 13; and

Figure 15 is a holographic reconstruction of a third hologram of the third image prior to optimization of the third hologram.

The same reference numbers will be used throughout the drawings to refer to the same or like parts.

## DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise. A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in codependent relationship.

## Optical configuration

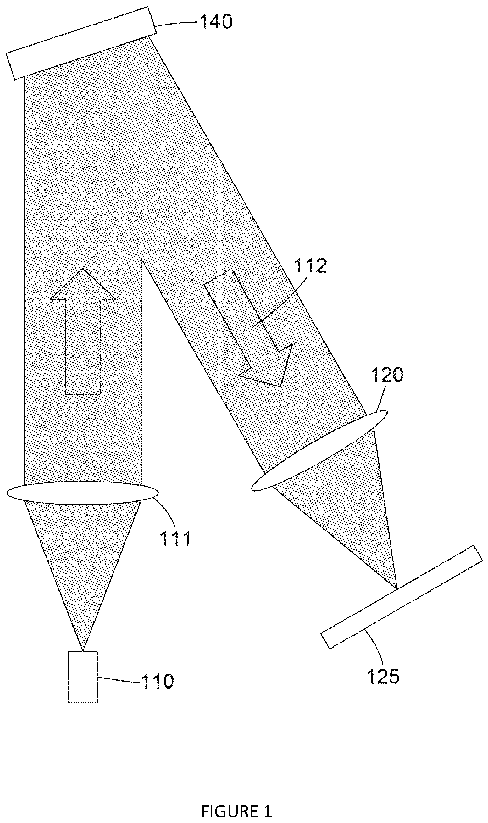

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is not a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

Example hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms.

A Fourier transform hologram may be calculated using an algorithm such as the Gerchberg-Saxton algorithm. Furthermore, the Gerchberg-Saxton algorithm may be used to calculate a hologram in the Fourier domain (i.e. a Fourier transform hologram) from amplitude-only information in the spatial domain (such as a photograph). The phase information related to the object is effectively "retrieved" from the amplitude-only information in the spatial domain. In some embodiments, a computer-generated hologram is calculated from amplitude-only information using the Gerchberg-Saxton algorithm or a variation thereof. The Gerchberg Saxton algorithm considers the situation when intensity cross-sections of a light beam, $I_A(x, y)$ and $I_B(x, y)$, in the planes A and B respectively, are known and $I_A(x, y)$ and $I_B(x, y)$ are related by a single Fourier transform. With the given intensity cross-sections, an approximation to the phase distribution in the planes A and B, $\Psi_A(x, y)$ and $\Psi_B(x, y)$ respectively, is found. The Gerchberg-Saxton algorithm finds solutions to this problem by following an iterative process. More specifically, the Gerchberg-Saxton algorithm iteratively applies spatial and spectral constraints while repeatedly transferring a data set (amplitude and phase), representative of $I_A(x, y)$ and $I_B(x, y)$, between the spatial domain and the Fourier (spectral or frequency) domain. The corresponding computer-generated hologram in the spectral domain is obtained through at least one iteration of the algorithm. The algorithm is convergent and arranged to produce a hologram representing an input image. The hologram may be an amplitude-only hologram, a phase-only hologram or a fully complex hologram.

In some embodiments, a phase-only hologram is calculated using an algorithm based on the Gerchberg-Saxton algorithm such as described in British patent 2,498,170 or 2,501,112.

However, embodiments disclosed herein describe calculating a phase-only hologram by way of example only. In these embodiments, the Gerchberg-Saxton algorithm retrieves the phase information $\Psi[u, v]$ of the Fourier transform of the data set which gives rise to a known amplitude information $T[x, y]$, wherein the amplitude information $T[x, y]$ is representative of a target image (e.g. a photograph). Since the magnitude and phase are intrinsically combined in the Fourier transform, the transformed magnitude and phase contain useful information about the accuracy of the calculated data set. Thus, the algorithm may be used iteratively with feedback on both the amplitude and the phase information. However, in these embodiments, only the phase information $\Psi[u, v]$ is used as the hologram to form a holographic representative of the target image at an image plane. The hologram is a data set (e.g. 2D array) of phase values.

In other embodiments, an algorithm based on the Gerchberg-Saxton algorithm is used to calculate a fully-complex hologram. A fully-complex hologram is a hologram having a magnitude component and a phase component. The hologram is a data set (e.g. 2D array) comprising an array of complex data values wherein each complex data value comprises a magnitude component and a phase component.

In some embodiments, the algorithm processes complex data and the Fourier transforms are complex Fourier transforms. Complex data may be considered as comprising (i) a real component and an imaginary component or (ii) a magnitude component and a phase component. In some embodiments, the two components of the complex data are processed differently at various stages of the algorithm.

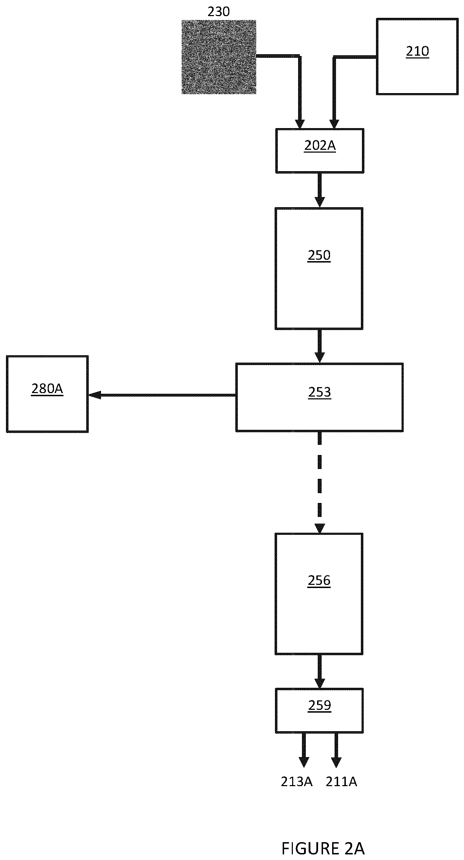

Figure 2A illustrates the first iteration of an algorithm in accordance with some embodiments for calculating a phase-only hologram. The input to the algorithm is an input image 210 comprising a 2D array of pixels or data values, wherein each pixel or data value is a magnitude, or amplitude, value. That is, each pixel or data value of the input image 210 does not have a phase component. The input image 210 may therefore be considered a magnitude-only or amplitude-only or intensity-only distribution. An example of such an input image 210 is a photograph or one frame of video comprising a temporal sequence of frames. The first iteration of the algorithm starts with a data forming step 202A comprising assigning a random phase value to each pixel of the input image, using a random phase distribution (or random phase seed) 230, to form a starting complex data set wherein each data element of the set comprising magnitude and phase. It may be said that the starting complex data set is representative of the input image in the spatial domain.

First processing block 250 receives the starting complex data set and performs a complex Fourier transform to form a Fourier transformed complex data set. Second processing block 253 receives the Fourier transformed complex data set and outputs a hologram 280A. In some embodiments, the hologram 280A is a phase-only hologram. In these embodiments, second processing block 253 quantises each phase value and sets each amplitude value to unity in order to form hologram 280A. Each phase value is quantised in accordance with the phase-levels which may be represented on the pixels of the spatial light modulator which will be used to "display" the phase-only hologram. For example, if each pixel of the spatial light modulator provides 256 different phase levels, each phase value of the hologram is quantised into one phase level of the 256 possible phase levels. Hologram 280A is a phase only Fourier hologram which is representative of an input image. In other embodiments, the hologram 280A is a fully complex hologram comprising an array of complex data values (each including an amplitude component and a phase component) derived from the received Fourier transformed complex data set. In some embodiments, second processing block 253 constrains each complex data value to one of a plurality of allowable complex modulation levels to form hologram 280A. The step of constraining may include setting each complex data value to the nearest allowable complex modulation level in the complex plane. It may be said that hologram 280A is representative of the input image in the spectral or Fourier or frequency domain. In some embodiments, the algorithm stops at this point.

However, in other embodiments, the algorithm continues as represented by the dotted arrow in Figure 2A. In other words, the steps which follow the dotted arrow in Figure 2A are optional (i.e. not essential to all embodiments).

Third processing block 256 receives the modified complex data set from the second processing block 253 and performs an inverse Fourier transform to form an inverse Fourier transformed complex data set. It may be said that the inverse Fourier transformed complex data set is representative of the input image in the spatial domain.

Fourth processing block 259 receives the inverse Fourier transformed complex data set and extracts the distribution of magnitude values 211A and the distribution of phase values 213A. Optionally, the fourth processing block 259 assesses the distribution of magnitude values 211A. Specifically, the fourth processing block 259 may compare the distribution of magnitude values 211A of the inverse Fourier transformed complex data set with the input image 510 which is itself, of course, a distribution of magnitude values. If the difference between the distribution of magnitude values 211A and the input image 210 is sufficiently small, the fourth processing block 259 may determine that the hologram 280A is acceptable. That is, if the difference between the distribution of magnitude values 211A and the input image 210 is sufficiently small, the fourth processing block 259 may determine that the hologram 280A is a sufficiently-accurate representative of the input image 210. In some embodiments, the distribution of phase values 213A of the inverse Fourier transformed complex data set is ignored for the purpose of the comparison. It will be appreciated that any number of different methods for comparing the distribution of magnitude values 211A and the input image 210 may be employed and the present disclosure is not limited to any particular method. In some embodiments, a mean square difference is calculated and if the mean square difference is less than a threshold value, the hologram 280A is deemed acceptable. If the fourth processing block 259 determines that the hologram 280A is not acceptable, a further iteration of the algorithm may be performed. However, this comparison step is not essential and in other embodiments, the number of iterations of the algorithm performed is predetermined or pre-set or user-defined.

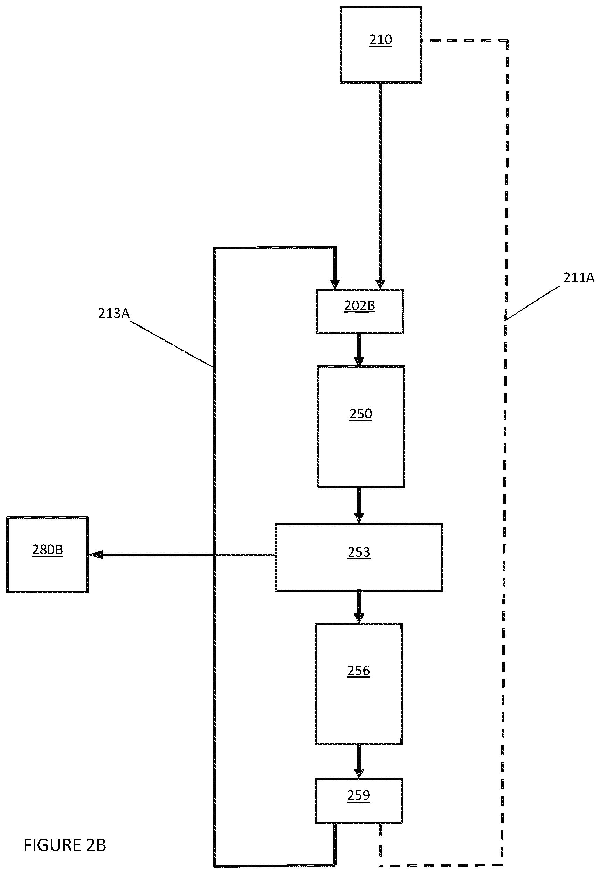

Figure 2B represents a second iteration of the algorithm and any further iterations of the algorithm. The distribution of phase values 213A of the preceding iteration is fed-back through the processing blocks of the algorithm. The distribution of magnitude values 211A is rejected in favour of the distribution of magnitude values of the input image 210. In the first iteration, the data forming step 202A formed the first complex data set by combining distribution of magnitude values of the input image 210 with a random phase distribution 230. However, in the second and subsequent iterations, the data forming step 202B comprises forming a complex data set by combining (i) the distribution of phase values 213A from the previous iteration of the algorithm with (ii) the distribution of magnitude values of the input image 210.

The complex data set formed by the data forming step 202B of Figure 2B is then processed in the same way described with reference to Figure 2A to form second iteration hologram 280B. The explanation of the process is not therefore repeated here. The algorithm may stop when the second iteration hologram 280B has been calculated. However, any number of further iterations of the algorithm may be performed. It will be understood that the third processing block 256 is only required if the fourth processing block 259 is required or a further iteration is required. The output hologram 280B generally gets better with each iteration. However, in practice, a point is usually reached at which no measurable improvement is observed or the positive benefit of performing a further iteration is outweighed by the negative effect of additional processing time. Hence, the algorithm is described as iterative and convergent.

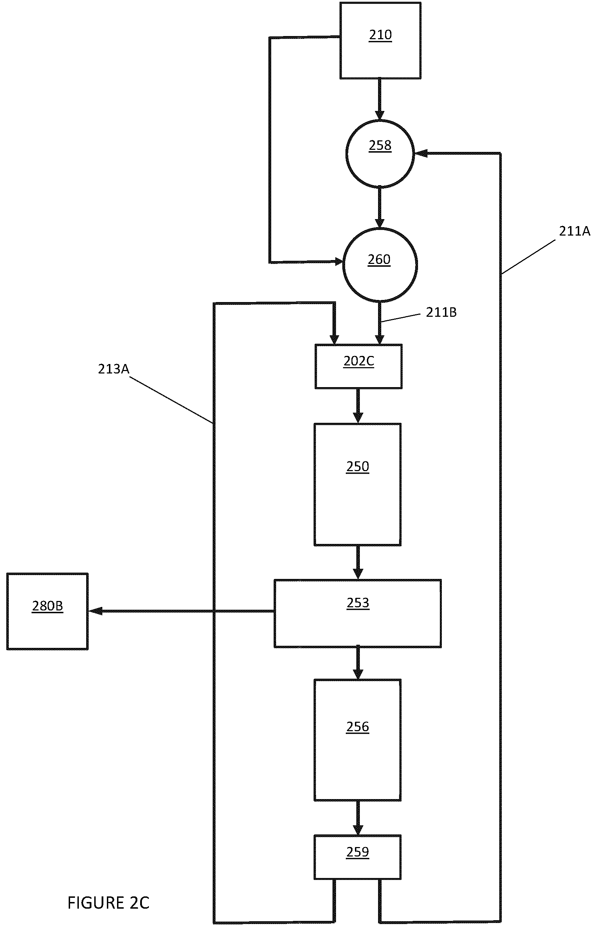

Figure 2C represents an alternative embodiment of the second and subsequent iterations. The distribution of phase values 213A of the preceding iteration is fed-back through the processing blocks of the algorithm. The distribution of magnitude values 211A is rejected in favour of an alternative distribution of magnitude values. In this alternative embodiment, the alternative distribution of magnitude values is derived from the distribution of magnitude values 211 of the previous iteration. Specifically, processing block 258 subtracts the distribution of magnitude values of the input image 210 from the distribution of magnitude values 211 of the previous iteration, scales that difference by a gain factor $\alpha$ and subtracts the scaled difference from the input image 210. This is expressed mathematically by the following equations, wherein the subscript text and numbers indicate the iteration number:

$$R_{n+1}[x, y] = F'\{\exp(i\Psi_n[u, v])\}$$

$$\Psi_n[u, v] = \angle F\{\eta \cdot \exp(i\angle R_n[x, y])\}$$

$$\eta = T[x, y] - \alpha(R_n[x, y] - T[x, y])$$

where:

F' is the inverse Fourier transform;
F is the forward Fourier transform;
R[x, y] is the complex data set output by the third processing block 256;
T[x, y] is the input or target image;
$\angle$ is the phase component;
$\psi$ is the phase-only hologram 280B;
$\eta$ is the new distribution of magnitude values 211B; and
$\alpha$ is the gain factor.

The gain factor $\alpha$ may be fixed or variable. In some embodiments, the gain factor $\alpha$ is determined based on the size and rate of the incoming target image data. In some embodiments, the gain factor $\alpha$ is dependent on the iteration number. In some embodiments, the gain factor $\alpha$ is solely function of the iteration number.

The embodiment of Figure 2C is the same as that of Figure 2A and Figure 2B in all other respects. It may be said that the phase-only hologram $\psi(u, v)$ comprises a phase distribution in the frequency or Fourier domain.

In some embodiments, the Fourier transform is performed using the spatial light modulator. Specifically, the hologram data is combined with second data providing optical power. That is, the data written to the spatial light modulation comprises hologram data representing the object and lens data representative of a lens. When displayed on a spatial light modulator and illuminated with light, the lens data emulates a physical lens - that is, it brings light to a focus in the same way as the corresponding physical optic. The lens data therefore provides optical, or focusing, power. In these embodiments, the physical Fourier transform lens 120 of Figure 1 may be omitted. It is known how to calculate data representative of a lens. The data representative of a lens may be referred to as a software lens. For example, a phase-only lens may be formed by calculating the phase delay caused by each point of the lens owing to its refractive index and spatially-variant optical path length. For example, the optical path length at the centre of a convex lens is greater than the optical path length at the edges of the lens. An amplitude-only lens may be formed by a Fresnel zone plate. It is also known in the art of computer-generated holography how to combine data representative of a lens with a hologram so that a Fourier transform of the hologram can be performed without the need for a physical Fourier lens. In some embodiments, lensing data is combined with the hologram by simple addition such as simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may be combined in the same way with grating data - that is, data arranged to perform the function of a grating such as image steering. Again, it is known in the field how to calculate such data. For example, a phase-only grating may be formed by modelling the phase delay caused by each point on the surface of a blazed grating. An amplitude-only grating may be simply superimposed with an amplitude-only hologram to provide angular steering of the holographic reconstruction. The second data providing lensing and/or steering may be referred to as a light processing function or light processing pattern to distinguish from the hologram data which may be referred to as an image forming function or image forming pattern.

In some embodiments, the Fourier transform is performed jointly by a physical Fourier transform lens and a software lens. That is, some optical power which contributes to the Fourier transform is provided by a software lens and the rest of the optical power which contributes to the Fourier transform is provided by a physical optic or optics.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

Embodiments relate to Fourier holography and Gerchberg-Saxton type algorithms by way of example only. The present disclosure is equally applicable to Fresnel holography and Fresnel holograms which may be calculated by a similar method. The present disclosure is also applicable to holograms calculated by other techniques such as those based on point cloud methods.

Light modulation

A spatial light modulator may be used to display the diffractive pattern including the computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

In some embodiments, the light-modulating elements (i.e. the pixels) of the spatial light modulator are cells containing liquid crystal. That is, in some embodiments, the spatial light modulator is a liquid crystal device in which the optically-active component is the liquid crystal. Each liquid crystal cell is configured to selectively-provide a plurality of light modulation levels. That is, each liquid crystal cell is configured at any one time to operate at one light modulation level selected from a plurality of possible light modulation levels. Each liquid crystal cell is dynamically-reconfigurable to a different light modulation level from the plurality of light modulation levels. In some embodiments, the spatial light modulator is a reflective liquid crystal on silicon (LCOS) spatial light modulator but the present disclosure is not restricted to this type of spatial light modulator.

A LCOS device provides a dense array of light modulating elements, or pixels, within a small aperture (e.g. a few centimetres in width). The pixels are typically approximately microns or less which results in a diffraction angle of a few degrees meaning that the optical system can be compact. It is easier to adequately illuminate the small aperture of a LCOS SLM than it is the larger aperture of other liquid crystal devices. An LCOS device is typically reflective which means that the circuitry which drives the pixels of a LCOS SLM can be buried under the reflective surface. The results in a higher aperture ratio. In other words, the pixels are closely packed meaning there is very little dead space between the pixels. This is advantageous because it reduces the optical noise in the replay field. A LCOS SLM uses a silicon backplane which has the advantage that the pixels are optically flat. This is particularly important for a phase modulating device.

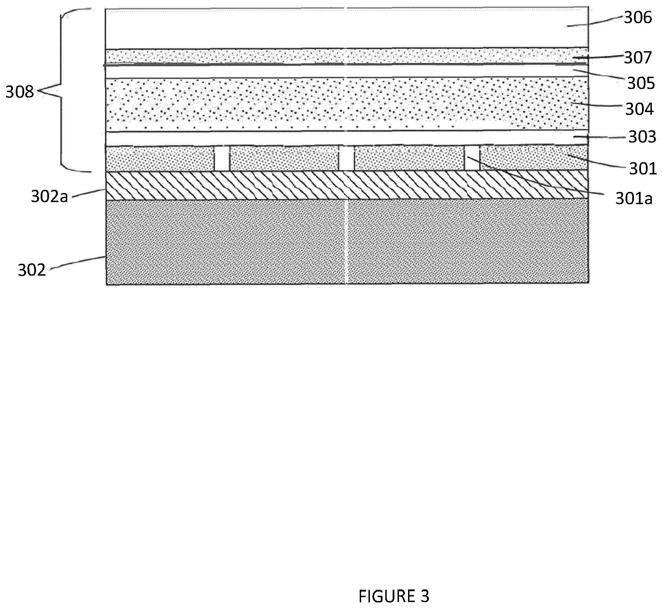

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror. An alignment layer 303 is disposed on the array of electrodes, and a liquid crystal layer 304 is disposed on the alignment layer 303. A second alignment layer 305 is disposed on the planar transparent layer 306, e.g. of glass. A single transparent electrode 307 e.g. of ITO is disposed between the transparent layer 306 and the second alignment layer 305. Each of the square electrodes 301 defines, together with the overlying region of the transparent electrode 307 and the intervening liquid crystal material, a controllable phase modulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images). However, the teachings of the present disclosure may equally be implemented using a transmissive LCOS SLM.

Image Projection using a small display device and a long viewing distance. The present disclosure relates to image projection wherein the separation between the display device and viewer is much greater than the size of the display device. The viewing distance (i.e. distance between the viewer and display device) may be at least an order of magnitude greater than the size of the display device. The viewing distance may be at least two orders of magnitude greater than the size of the display device. For example, the pixel area of the display device may be 10 mm x 10 mm and the viewing distance may be 1 m. The image projected by the system is formed on a display plane that is spatially separated from the display device.

In accordance with the present disclosure, the image is formed by holographic projection. A hologram is displayed on the display device. The hologram is illuminated by a light source (not shown) and an image is perceived on a display plane that is spatially separated from the hologram. The image may be real or virtual. For the purpose of the explanation that follows, it is helpful to consider a virtual image formed upstream of the display device. That is, appearing behind the display device. However, it is not essential that the image is a virtual image and the present disclosure is equally applicable to a real image formed between the display device and viewing system.

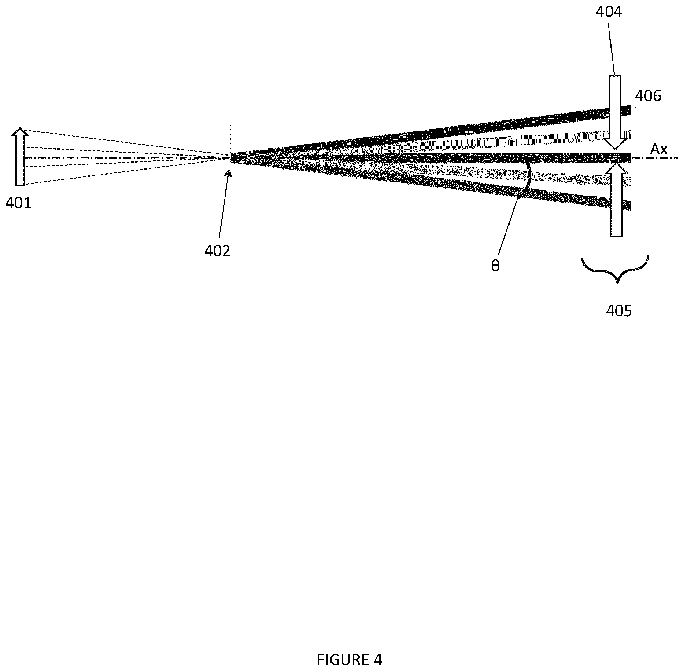

The display device comprises pixels that display the hologram. The pixel structure of the display device is diffractive. The size of the holographic image is therefore governed by the rules of diffraction. A consequence of the diffractive nature of the display device is explained below with reference to Figure 4.

Figure 4 shows a pixelated display device 402 arranged to display a hologram forming a virtual image 401 upstream of the display device 402. The diffraction angle, $\theta$, of the display device determines the size of the virtual image 401. The virtual image 401, display device 402 and viewing system 405 are arranged on an optical axis, Ax.

The viewing system 405 has an entrance aperture 404 and viewing plane 406. The viewing system 406 may be a human eye. The entrance aperture 404 may therefore be the pupil of the eye and the viewing plane 406 may be the retina of the eye.

The light travelling between the display device 402 and viewing system 405 is modulated with a hologram of the image (not the image itself). However, Figure 4 illustrates how the hologram divides the virtual image content by angle. Each illustrated light ray bundle relates to a different part of the virtual image 401. More specifically, the light in each light ray bundle is encoded by the hologram with information about one part of the virtual image. Figure 4 shows five example ray bundles each characterized by a respective angle to the optical axis, Ax, and each representing a respective part of the virtual image. In this example, one of the light bundles passes through the pupil 404 and the other four light bundles are blocked by the pupil 404. Again, the five different ray bundles correspond to five different parts of the virtual image 401. The full image content of the virtual image is effectively divided by angle. The light bundle travelling along the optical axis, Ax, carries the centre part of the image information - that is, the information relating to the centre of the image. The other light bundles carry the other parts of the image information. The two light bundles shown at the extremes of the light cone carry the edge parts of the image information. A consequence of this division of the image information by angle is that not all image content can pass through the entrance aperture 404 of the viewing system at a given viewing position. In other words, not all image content is received by the eye. In the example of Figure 4, only one of the five light bundles illustrated passes through the pupil 404 at any viewing position. The reader will understand that five light bundles are shown by way of example only and the process described is not limited to division of the image information of the virtual image into only five light bundles.

In this example, the centre part of the image information is received by the eye. The edge part of the image information is blocked by the pupil of the eye. The reader will understand that if the viewer moves up or down, a different light bundle may be received by the eye and, for example, the centre part of the image information may be blocked. The viewer therefore only sees a portion of the full image. The rest of the image information is blocked by the entrance pupil. The view of the viewer is heavily restricted because they are effectively looking at the image through the small aperture of the display device itself.

In summary, light propagates over the range of diffraction angle from the display device. At a 1 m viewing distance, only a small range of angles from the display device can propagate through the eye's pupil to form image at the retina for a given eye position. The only parts of the virtual image that are visible are the ones falling within the small angular range shown in Figure 4 that passes through the entrance aperture. Accordingly, the field of view is very small, and the specific angular range depends heavily on the eye position.

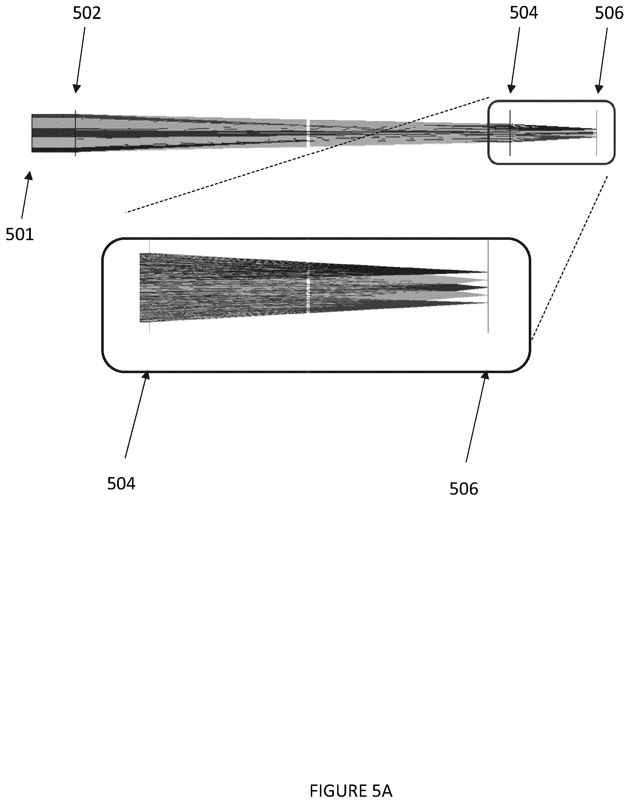

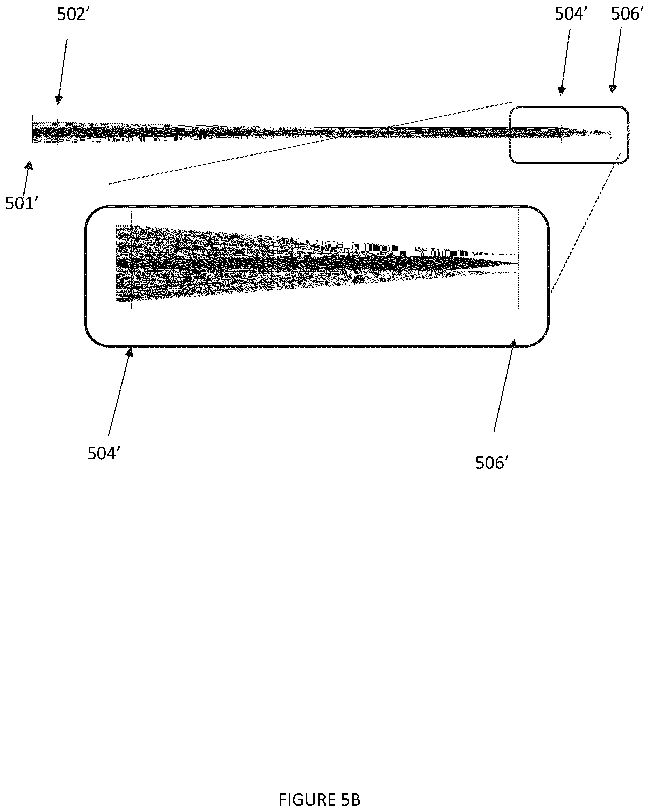

The problem of the small field of view and sensitivity to eye position explained with reference to Figure 4 is a consequence of the large viewing distance and small aperture of the display device. The importance of viewing distance is explained further with reference to Figures 5 to 7.

Figure 5A shows a display device 502 arranged to display a hologram and propagate light modulated in accordance with the hologram to a viewing system comprising an entrance aperture 504 and viewing plane 506. The virtual image 501 is at infinity and so the rays traced between the virtual image and display device are collimated. The lower part of Figure 5A shows a magnified view of the viewing system. This figure is schematic and therefore physiological detail of the eye is not shown. In practice, there is, of course, a light source (not shown in Figure 5A) arranged to illuminate the display device 502.

Figure 5A only shows those rays of light that can propagate through the aperture 504; any other rays, which cannot pass through the aperture 504, are omitted. However, it will be understood that those other rays would also propagate from the display device 502, in practice. In Figure 5A, the distance between the display device and viewing plane is small enough that the full diffraction angle from the display device can form the image on the retina. All light propagation paths shown from the virtual image pass through the entrance aperture. Accordingly, all points on the virtual image map onto the retina and all image content is delivered to the viewing plane. The field of view of the perceived image is therefore a maximum. At the optimum position, the field of view is equal to the diffraction angle of the display device. Interestingly, different image points on the retina are formed from light propagating from different regions on the display device 502 - e.g., the image point closest to the top of Figure 5A is formed from light propagating from the lower portion of the display device only. Light propagating from other regions of the display device does not contribute to this image point.

Figure 5B shows the situation that arises as the viewing distance is increased. In more detail, Figure 5B shows a display device 502' arranged to display a hologram and propagate light modulated in accordance with the hologram to a viewing system comprising an entrance aperture 504' and viewing plane 506'. The virtual image 501' is at infinity and so the rays traced between the virtual image and display device are collimated. The lower part of Figure 5B shows a magnified view of the viewing system. This figure is schematic and therefore physiological detail of the eye is not shown. In practice, there is, of course, a light source (not shown in Figure 5B) arranged to illuminate the display device 502'.

Figure 5B only shows those rays of light that can propagate through the aperture 504'. At the larger viewing distance of Figure 5B, some of the ray bundles are blocked by the entrance aperture 504'. Specifically, ray bundles associated with edge parts of the virtual image are blocked by the entrance pupil 504'. Accordingly, the entire virtual image is not visible and the part of the virtual image that is visible is heavily dependent on eye position. Thus, large distances between the display device and viewing system are problematic owing to the small size of the display device.

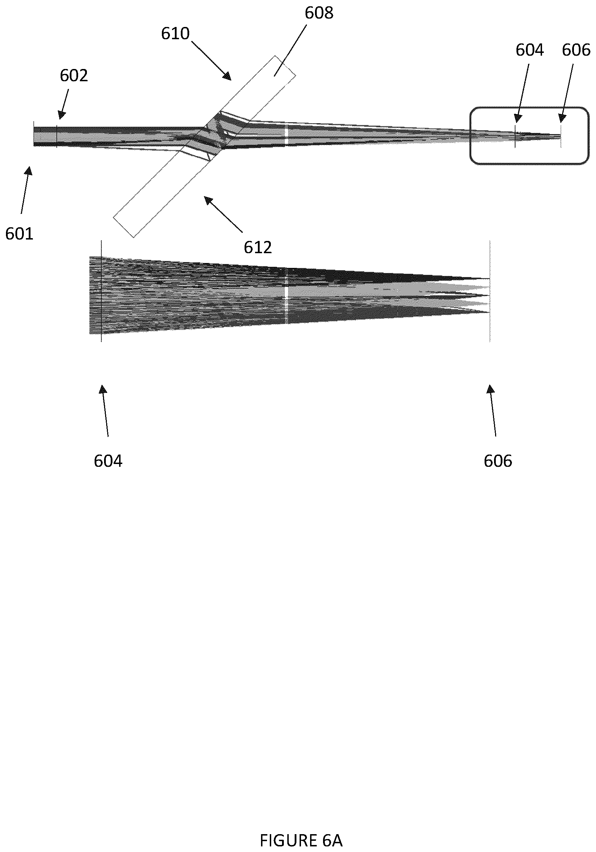

Figure 6A shows an improved system comprising a display device 602, propagating light that has been encoded with a hologram displayed on the display device 602, towards a viewing system that comprises an entrance aperture 604 and a viewing plane 606. In practice, there is, of course, a light source (not shown) arranged to illuminate the display device 602. The improved system further comprises a waveguide 608 positioned between the display device 602 and the entrance aperture 604. The lower part of Figure 6A shows a magnified view of the entrance pupil 604 and the viewing plane 604. This figure is schematic and therefore physiological detail of the eye is not shown.

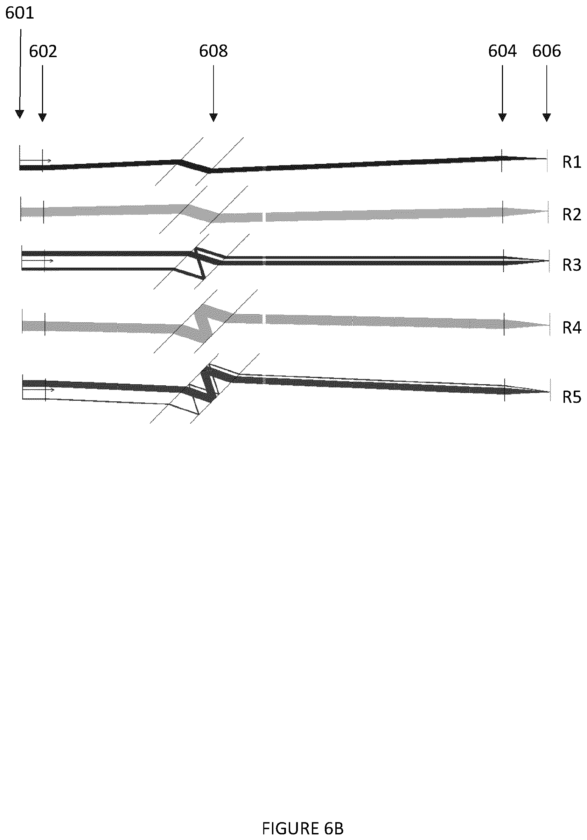

The viewing distance of Figures 6 is the same as that of Figure 5B. However, the ray bundles that were blocked in Figure 5B are effectively recovered by the waveguide 608 such that the full image information is received by the viewing system - despite the longer viewing distance.

The presence of the waveguide 608 enables all angular content from the display device 602 to be received by the eye, even at this relatively large projection distance. This is because the waveguide 608 acts as a pupil expander, in a manner that is well known and so is described only briefly herein.

In brief, the waveguide 608 comprises a substantially elongate formation. In this example, it comprises an optical slab of refractive material, but other types of waveguide are also well known and may be used. The waveguide 608 is located so as to intersect the light cone that is projected from the display device 602, for example at an oblique angle. The size, location, and position of the waveguide 608 are configured to ensure that light from each of the five ray bundles, within the light cone, enters the waveguide 608. Light from the light cone enters the waveguide 608 via its first planar surface 610 (located nearest the display device 602) and is guided at least partially along the length of the waveguide 608, before being emitted via its second planar surface 612, substantially opposite the first surface 610 (located nearest the eye).

As will be well understood, the second planar surface 612 is partially reflective, partially transmissive. In other words, when each ray of light travels, within the waveguide 608, from the first planar surface 610 to the second planar surface 612 of the waveguide 608, some of the light will be transmitted out of the waveguide 608 and some will be reflected by the second planar surface 612, back towards the first planar surface 610. The first planar surface 610 is reflective, such that all light that hits it, from within the waveguide 608, will be reflected back towards the second planar surface 612.

Therefore, some of the light may simply be refracted between the two planar surfaces 610, 612 of the waveguide 608 before being transmitted, whilst other light may be reflected, and thus may undergo one or more reflections, (or 'bounces') between the planar surfaces 610, 612 of the waveguide 608, before being transmitted. A net effect of the waveguide 608 is therefore that the transmission of the light is effectively expanded across multiple locations on the second planar surface 612 of the waveguide 608. All angular content output by the display device 602 may thus be present, at a greater number of positions on the display plane (and at a greater number of positions on the aperture plane) than would have been the case, in the absence of the waveguide 608. This means that light from each ray bundle may enter the entrance aperture 604 and contribute to an image formed by the viewing plane 606, despite the relatively large projection distance. In other words, all angular content from the display device 602 can be received by the eye. Therefore, the full diffraction angle of the display device 602 is utilised and the viewing window is maximised for the user. In turn, this means that all the light rays contribute to the perceived virtual image 601.

Figure 6B shows the individual optical paths for each of the five ray bundles that contribute to five respective image points within the virtual image 601 that is formed in Figure 6A - labelled from top to bottom as R1 to R5, respectively. As can be seen therein, the light of each of R1 and R2 is simply refracted and then transmitted by the waveguide 608. The light of R4, on the other hand, encounters a single bounce before being transmitted. The light of R3 comprises some light from a corresponding first part of the display device 602 that is simply refracted by the waveguide 608 before being transmitted, and some light from a second, different corresponding part of the display device 602 that encounters a single bounce before being transmitted. Similarly, the light of R5 comprises some light from a corresponding first part of the display device 602 that encounters a single bounce before being transmitted and some light from a second, different corresponding part of the display device 602 that encounters two bounces before being transmitted. For each of R3 and R5, two different parts of the LCOS propagate light corresponding to that part of the virtual image.

The present inventors have recognised that, at least in some applications, it is preferable for the virtual image distance - i.e., for the distance from the viewer to the virtual image - to be finite, as opposed to the virtual image being formed at infinity. In certain applications, there will be a preferred virtual image distance, at which it is desirable or necessary for the virtual image content to appear. For example, this can be the case in a head-up display, for example in an automotive setting, for example if virtual image content is to be superimposed onto real content that is being viewed by the viewer through a vehicle windscreen. For example, a desired virtual image distance may comprise the virtual image content being formed a few metres, for example 3 metres or 5 metres, in front of the viewer's vehicle or windscreen.

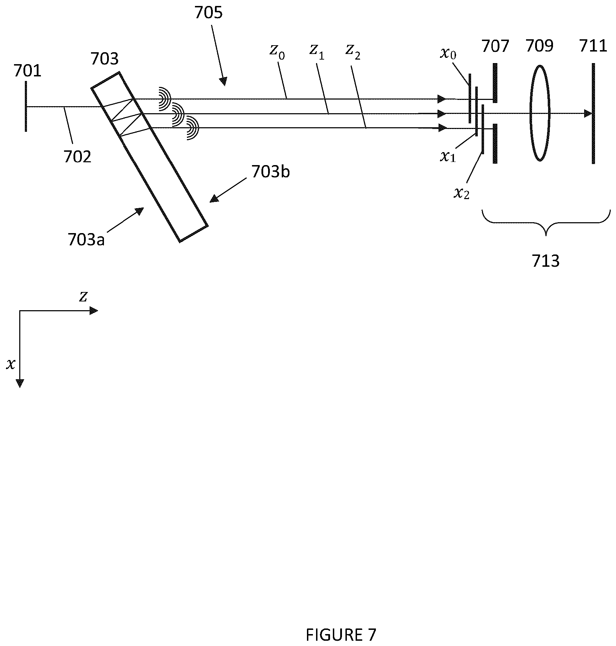

Hologram calculation for small display device, long viewing distance and pupil expander. The inventors have devised a method of calculating hologram for the optical system shown in Figure 7. Importantly, the display device is relatively small and the projection distance is relatively long. The hologram is projected directly to the viewing system and the method is capable of implementation in real-time. The relatively small size of the display device and relatively long projection distance necessitate a pupil expander. The method addresses the different paths through the pupil expander. The method allows image content to appear at different distances from the viewing system and/or plural distances, optionally, at the same time - e.g. using one hologram. The method allows image content to appear downstream of the display device and upstream of the display device, optionally, at the same time - e.g. using one hologram.

Figure 7 shows a spatial light modulator 701 operable to display a hologram of an image. In this embodiment, the spatial light modulator 701 is a liquid crystal on silicon device arranged to module the phase of received light. The spatial light modulator 701 is illuminated by at least partially coherent light from a light source not shown. The light source may be a laser diode. The spatial light modulator 701 outputs light that is spatially modulated in accordance with the display hologram. Figure 7 shows one light ray 702 of the spatially modulated light. The spatially modulated light is received by a pupil expander 703. The pupil expander 703 is inclined relative to the plane of the display device 701. The pupil expander 703 therefore receives light at non-normal incidence. The incident angle (the angle the optical axis makes with the pupil expander) may be less than 25 degrees such as 10 to 20 degrees. The pupil expander comprises an input surface 703a that receives the spatially modulated light and an output surface 703b. The input surface 703a and output surface 703b are substantially parallel and elongate in a direction of pupil expansion. The input surface 703a comprises at least a portion that is substantially fully reflection (e.g. R = 1). The output surface 703b comprises at least a portion that is highly reflective but partially transmissive (e.g. R = 0.9 and T = 0.1). The reflective surfaces are arranged such that spatially modulated light bounces back and forth therebetween, and light is emitted at a plurality of points along the output surface 703b, as described above with reference to waveguide 608 of Figure 6. In this embodiment, the pupil expander is substantially elongate. The pupil expander provides pupil expansion in one-direction - namely, the elongate direction - but the present disclosure may be expanded to include the presence of a second pupil expander arranged to expand the pupil in an orthogonal direction.

Figure 7 shows how light ray 702 has been effectively replicated twice to form three propagation paths 705 each associated with a different distance, Z0, Z1 and Z2. The shortest propagation path corresponds to Z0 and, in this example, light that has passed through the waveguide without any internal reflections. The middle-distance propagation path of the three shown corresponds to Z1 and two internal reflections in the pupil expander (one by each surface). The longest propagation path shown corresponds to Z2 and four internal reflections in the pupil expander (two by each surface). The planes x0, x1 and x2 show the spatial extent of the light field associated with each of the three propagation paths, Z0, Z1 and Z2, respectively. More specifically, Figure 7 shows how the three planes x0, x1 and x2 are offset from each other in the x-direction.

Figure 7 further shows a viewing system 713 comprising an entrance pupil 707, a lens 709 and a light sensor 711. In embodiments, the viewing system 713 is a human eye and the light sensor 711 is the retina of the eye. Figure 7 shows how only some of the light field associated with each propagation path passes through the entrance 707. Figure 7 shows the light ray associated with centre of the middle-distance propagation path passing through the centre of the entrance pupil 707. But, for example, the light ray associated with the centre of the light field of shortest propagation path is blocked by a top portion of the aperture 707. However, other light rays associated with the light field of the shortest propagation path can pass through the aperture 707. The light ray associated with the centre of the light field of the longest propagation path is blocked by a lower portion of the aperture 707. However, other light rays associated with the light field of the longest propagation path can pass through the aperture 707 too.

Light passing through aperture 707 is focused by lens 709 onto the light sensor 711. The plane of the light sensor 711 is substantially parallel to the plane of the display device 701, and is therefore inclined relative to the elongate dimension of the pupil expander 703 too.

Figure 7 shows three possible light propagation paths by way of example only. The present disclosure is not limited by the number of propagation paths. That is, as the skilled person will appreciate from the following description, the method may be extended to factor-in any number of light propagation paths. Likewise, it is not essential that the pupil expander is inclined relative to the display plane and sensor plane.

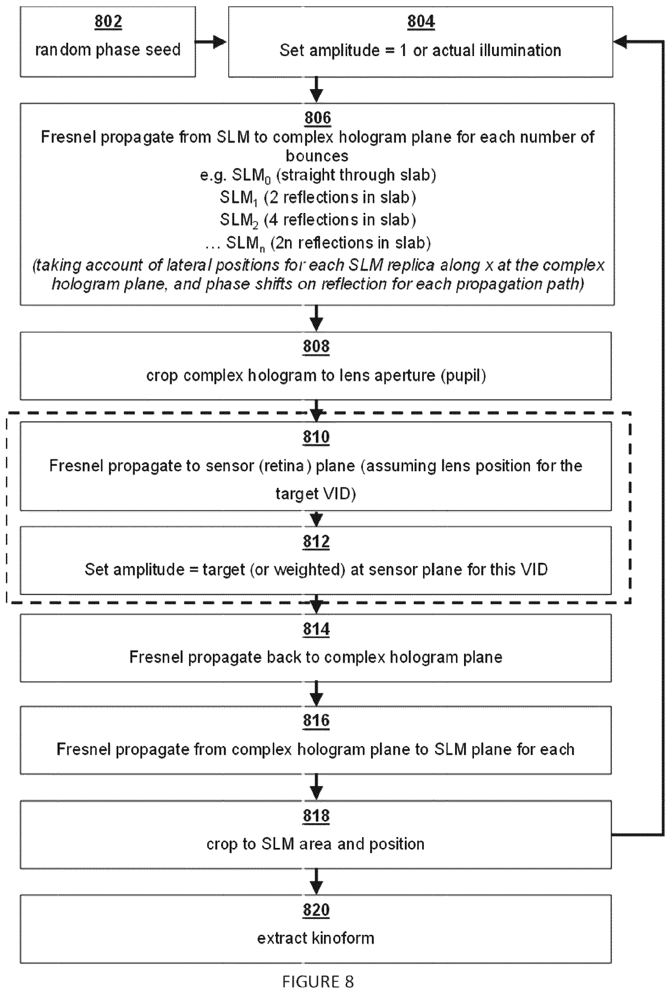

Figure 8 is a flowchart showing the steps of the method. The method resembles a Gerchberg-Saxton type algorithm which uses mathematical transforms back and forth between the image plane and hologram to converge on a phase hologram corresponding to the image. The amplitude component of the light field after each propagation to the image plane or hologram plane is modified or constrained but the phase component is preserved.

A zeroth stage of the method comprises steps 802 and 804. The zeroth stage comprises forming a zeroth complex light field. Step 802 provides a random phase seed forming the phase component of the zeroth complex light field. Step 804 provides the amplitude component of the zeroth complex light field. The amplitude component may be unity or an amplitude distribution representative of the light of a light source that will be used to reconstruction the image from the hologram. In step 806, the zeroth complex light field is Fresnel propagated from the spatial light modulator 701 (i.e. from the hologram plane) to the entrance pupil 707 of the viewing system 713 (more specifically, to the plane containing the entrance pupil 707 of the viewing system 713). Again, this embodiment refers to Fresnel propagation as just one example of a number of different mathematical transforms that may be used without departing from the scope of this disclosure. Step 806 is performed for each number of bounces or internal reflections provided by the pupil expander 703 to form a complex light field in respect of each light propagation path. Step 806 includes taking account of the lateral position of the complex light field in the x-direction at the plane of the entrance pupil 707, and phase shifts on each reflection within the pupil expander 703. The different complex light fields may be combined, for example, by addition. The first stage further comprises step 808 of cropping the combined complex light field in accordance with the size and shape of the entrance pupil 707 to form the first complex light field at the entrance pupil 707.

A second stage of the method comprises steps 810 and 812. In step 810, a second complex light field is determined by propagating the first complex light field from the entrance pupil through lens 709 and to the plane of the light sensor 711. Step 812 comprises modifying the amplitude component of the complex light field arriving at the light sensor 711. More specifically, step 812 comprises replacing the amplitude component of the complex light field with the amplitude component of the target image or an amplitude component based on that of the target image such as a weighted version of the amplitude component of the target image. The position of the lens 709 used in the propagation determines the image distance - that is, wherein space the image content will appear. In some embodiments, the image is a virtual image and this distance may be referred to as a virtual image distance, "VID".

Advantageously, the method disclosed herein allows image content to be formed at a plurality of different image distances - e.g. multiple VIDs - using the same hologram. The inventors identified that this may be achieved by repeating the second stage for each image distance by considering different positions of lens 709 in the z-direction. The complex light fields determined in accordance with this approach for each different image distance may be combined by addition, for example.

A third stage of the method comprises step 814 in which the second complex light field is propagated back to the entrance pupil 707 via the lens 709. This may be referred to as a reverse propagation merely to reflect that the light is travelling in the opposite z-direction. In some embodiments, the reverse propagation is a mathematical inverse of the corresponding "forward" propagation. The third stage also comprises cropping the propagated light field in accordance with the size and shape of the entrance pupil 707 to form the third complex light field.

A fourth stage comprises steps 816 and 818. In step 816, the light is propagated back to the plane of the spatial light modulator 702 via the plurality of light propagations paths of the pupil expander, in the matter described above in relation to the first stage - but in the opposite light direction, of course (i.5 e. a "reverse" propagation). Step 818 comprises cropping the propagated light field in accordance with the size and position of the active/pixel area of the display device. The number of complex values of each complex light field may be equal or less than the number of pixels of the display device. Step 820 comprises extracting the hologram from the fourth complex light field. The hologram may comprise the phase values of the fourth complex light field in which case the hologram may be referred to as a kinoform. As explained earlier in this disclosure, the method may equally start at the image plane (i.e. the third stage). At least one iteration of each stage is required in accordance with this disclosure.

Determination of small FoV sub-hologram from a larger FoV hologram

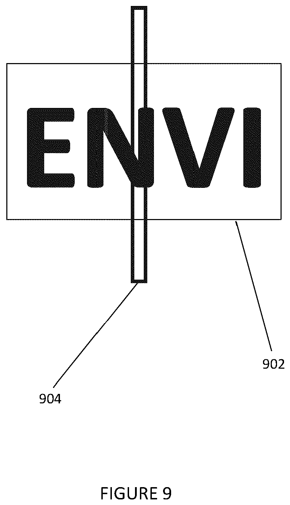

Figure 9 is a schematic illustration (not to scale) of an image 902. The image 902 is of the letters "E" "N" "V" "I". The image 902 may be a sub-region or a limited portion of a larger image. The larger image may be of the word "ENVISICS". The image 902 is produced from a first hologram, e.g. by illuminating the first hologram with light.

In some holographic displays, such as the system disclosed in British patent application 2108456.1 filed 14 June 2021, a switchable aperture is employed to suppress crosstalk. In such holographic displays, the entire image/replay in any given frame tends to be divided into angular zones with their widths (i.e. the sub-FoV) determined by the pupil size, interpupil distance of the viewer and the image distance (e.g. virtual image distance). In some embodiments, the first hologram may be a 1st order sub-hologram that provides one of the angular zones. The first hologram, e.g. 1st order sub-holograms, can be produced from a GS loop-based algorithm such as the one disclosed in British patent application 2112213.0 filed 26 August 2021. As disclosed in this patent application, a GS loop-based algorithm can be cleverly modified for pupil expansion with a rod/slab waveguide. In the modification, wavefronts exiting the pupil expander at different output positions are effectively considered as originating from different hologram replicas (by considering the optical path from hologram to eye when unfolded). A 1st order sub-hologram can be calculated for each replica. In order to achieve the full field of view, each 1st order sub-hologram contributes to a sufficiently large sub-region of the image/replay. The first hologram may be calculated from a sub-image of the full target image.

The inventors have found that to adapt to viewers of different IPDs, angular zones with customisable widths/FoV are beneficial. In accordance with this disclosure, control of the angular zones is provided by computation of 2nd order sub-holograms which produce an even smaller but controllable FoV than the 1st order sub-holograms. Embodiments comprise obtaining one or more second holograms (e.g. 2nd order sub-holograms) from a first hologram (e.g. 1st order sub-hologram). Each of the second holograms has an arbitrary and smaller FoV than the FoV of corresponding first hologram. Each second hologram is therefore of a respective limited portion 904 of the image 902. As such, the second hologram is a 2nd order sub-hologram of a limited portion 904 of a sub-region 902 of a larger image. To obtain one of the second holograms, a complex light field encoded with/by the first hologram is propagated from the hologram plane to the image plane (e.g. where the image would form on the retina). The propagation of the complex light field may involve a Fresnel transform or Fourier transform of the first hologram. Since the first hologram contains all the information of angular components, to obtain a second hologram having a smaller width/FoV from the first hologram, the content/information outside of the desired width/FoV can be effectively thrown away. This may be done by applying an amplitude constrain on the complex light field in the image plane. The amplitude constraint may be based on the desired width/FoV. In particular, the amplitude constraint may include setting the amplitude components of the complex light field that correspond to portions of the image that are outside of the limited portion to be zero. Any angular components that existed in the first hologram will be filtered and discarded once the amplitudes corresponding to those components are set to zero. The modified complex light field is then propagated back (from the image plane) to the hologram plane to obtain the second hologram (more specifically, second-order hologram), i.e. an inverse operation of the propagation of the complex light field.

Using the above-described method only a single iteration (back and forth) is required to obtain a viable second hologram. It has been verified both in simulation and experimentation that the FoV of a 2nd order sub-hologram computed using the above-described method can be as low as 0.05 degree in angular space using a single iteration. This allows fast and precise control of the desired width/FoV of each zone for crosstalk suppression. This in turns tends to allow for precise adjustment of the width of different zones for adapting to users with different IPDs. For specific users/IPDs, the use of customisable width/FoV at specific position means that it is possible to further customise the zone width/FoV of specific second holograms to compensate for head tilt, neck rotation and eyeball rotation. Also, for specific users/IPDs, the use of customisable width/FoV at specific positions means that it is possible to customise the zone width/FoV of specific second holograms to adapt to axial head movement, i.e. moving the head forward or backward.

A sensor may be employed to detect pupil size and/or IPD of a viewer viewing the holographic display device employing the above-described method. The plurality of second holograms may be obtained, each corresponding to a respective portion 904 of the image 902. Each of the second holograms may have a width/FoV based on the sensed pupil size and/or IPD of the viewer.

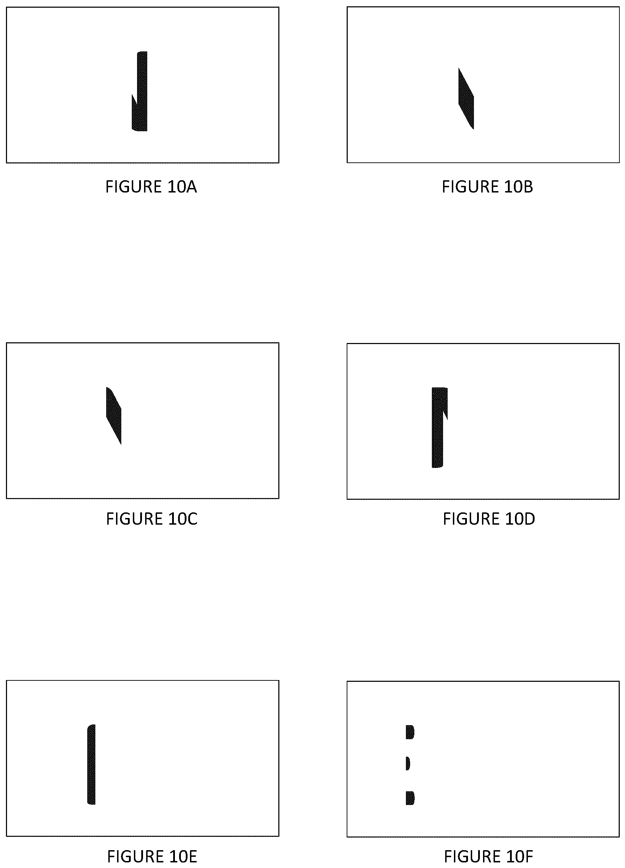

Figures 10A-10F each depict respective portions of the image 902. Figures 10A-10D each depicts a respective portions of the letter N. Figures 10E-10F each depicts a respective portion of the letter E. Each of the portions depicted in Figures 10A-10D may be obtained using the method (discussed above in relation to Figure 9) to obtain the second hologram of the limited portion of the image.

A complex light field corresponding to the first hologram is propagated from the hologram plane to the image plane. The first hologram may be the image 902 of the letters "ENVI". Applying an amplitude constrain on the complex light field in the image plane. The amplitude constraint may be based on the portion of the letter N depicted in Figure 10A. In particular, the amplitude constraint may include setting the amplitude components of the complex light field that does not correspond to the portion of the letter N depicted in Figure 10A to be zero. The modified complex light field is then back propagated from the image plane to the hologram plane to obtain a second hologram.

Subsequently the complex light field in the image plane may be modified again but with an amplitude constraint based on the portion of the letter N depicted in Figure 10B. In particular, the amplitude constraint may include setting the amplitude components of the complex light field that does not correspond to the portion of the letter N depicted in Figure 10B to be zero. This modified complex light field is then back propagated from the image plane to the hologram plane to obtain another second hologram.

Similarly, the complex light field in the image plane may be modified again but with an amplitude constraint based on the portion of the letter N depicted in Figure 10C. In particular, the amplitude constraint may include setting the amplitude components of the complex light field that does not correspond to the portion of the letter N depicted in Figure 10C to be zero. This modified complex light field is then back propagated from the image plane to the hologram plane to obtain yet another second hologram.

The complex light field in the image plane may be modified again but with an amplitude constraint based on the portion of the letter N depicted in Figure 10D. In particular, the amplitude constraint may include setting the amplitude components of the complex light field that does not correspond to the portion of the letter N depicted in Figure 10D to be zero. This modified complex light field is then back propagated from the image plane to the hologram plane to obtain yet another second hologram.

The complex light field in the image plane may be modified again but with an amplitude constraint based on the portion of the letter E depicted in Figure 10E. In particular, the amplitude constraint may include setting the amplitude components of the complex light field that does not correspond to the portion of the letter E depicted in Figure 10E to be zero. This modified complex light field is then back propagated from the image plane to the hologram plane to obtain yet another second hologram.

The complex light field in the image plane may be modified again but with an amplitude constraint based on the portion of the letter E depicted in Figure 10F. In particular, the amplitude constraint may include setting the amplitude components of the complex light field that does not correspond to the portion of the letter E depicted in Figure 10F to be zero. This modified complex light field is then back propagated from the image plane to the hologram plane to obtain yet another second hologram.

In the above way, a plurality of second holograms may be created. Each of the second holograms is of a respective one of the portions depicted in Figures 10A-10F.

A composite hologram may be formed from the plurality of second holograms. The composite hologram may be formed by simply summing the complex optical field represented by the plurality of second holograms.

Final example - change of effective IPD / shuttering scheme

When the viewer of the holographic display turns their head, thus altering the IPD in a plane parallel to the display, the image seen by the viewer will be affected. The viewer may experience eye crosstalk (as described in the earlier British patent, 2112213.0) - e.g. because the effective IPD is changed and therefore the shutter scheme is no longer optimal. To correct, the widths/FoV of the image zones may be altered (e.g. increased or decreased) in accordance with a re-optimization of the size and position of the shutter zones. In embodiments, one or more updated first-order holograms are provided.

The image zones may be reconfigured (e.g. width and/or position) to compensate for the change in IPD. In an example, the image width/FoV associated with a first-order hologram is changed for compatibility with a shutter re-configuration. For example, the system may determine that the width of the current shutter zone should be decreased (because of a change in the effective IPD). In response to this determination, a new first-order hologram corresponding to the decreased shutter zone is recalculated using only some of the second-order holograms (of the present disclosure) that were previously part of the original first-order hologram (of the original shutter zone). Effectively, at least one second-order hologram corresponding to one side (i.e. extremity) of the FoV is omitted from the original first-order hologram. The remaining second-order holograms can then be summed (in complex optical field) in the hologram plane to obtain an updated (i.e. new) first-order hologram. The reader will understand that, likewise, additional second-order holograms (that were previously associated with a different image/shutter zone) may be combined with the new first-order hologram in accordance with re-optimization of the shutter.

Second example - efficient update when image change is small

The above-described method is also beneficial for computing a hologram of dynamic content. Dynamic content is content that may be changing, e.g. a display of the current speed of a moving vehicle. The composite hologram obtained in the above-described way may be updated by only changing the second holograms that correspond to the portion of the image that is changing. For example, if the speed changes from 80 kph to 85 kph, the only change needed is the changing of the number 0 to the number 5. To do this, a second hologram of the text "8X kph" (where X is a black/blank region) and another second hologram of the number "0" can be summed. This composite hologram may be used to display the image "80 kph". A new second hologram of the number "5" is obtained, e.g. by performing a GS loop based algorithm. The second hologram of the text "8X kph" can be summed with the new second hologram of the number "5" to obtain a new composite hologram which can be used to display the image "85 kph". Using this method to compute dynamically changing holograms saves time and computing power since only the holograms of the portions of the image that are changing are changed. The second hologram of the "5" may be rapidly determined from a first hologram of "85 kph" in accordance with this disclosure.

Third example - efficient colour change

In another example, which benefits from the teachings of the present disclosure, the colour of a portion of the image and/or at least one image element (e.g. a headlamp icon) is rapidly changeable using the second hologram. In embodiments, a colour display is provided by superimposing red, green and blue images in a manner that will be familiar to the person skilled in the art. Each single colour image is formed using a respective hologram. For example, it may be possible to change the colour of an image element from yellow to green by nulling the red hologram (i.e. the hologram used for the red colour channel). This may comprise setting all hologram pixel values of the red hologram to zero (or the modulation value corresponding to black). This effectively removes the red colour component from the image element and hence changes the colour of the element from yellow to green.

Fourth example - efficient update when image change is small - version 2

The fourth example is another example where a method according to the present disclosure is beneficial for computing a hologram of dynamic content. Like the second example, the fourth example relates to a display of the current speed of a moving vehicle as the dynamic content (although this is exemplary only, and the method described herein is applicable to any sort of dynamic content where a relatively small portion of an image is dynamically changing). Unlike the second example, where a composite hologram is calculated, the fourth example comprises changing the target picture used in the hologram calculation to determine a new hologram of a changed (or modified) target picture in relatively few iterations.

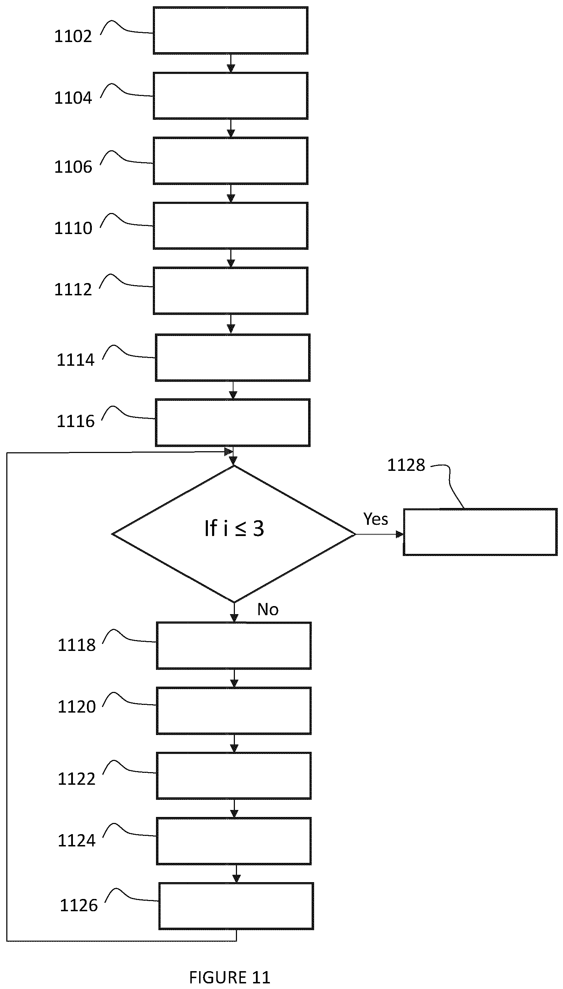

Figure 11 shows a flow diagram of a method according to the fourth example.

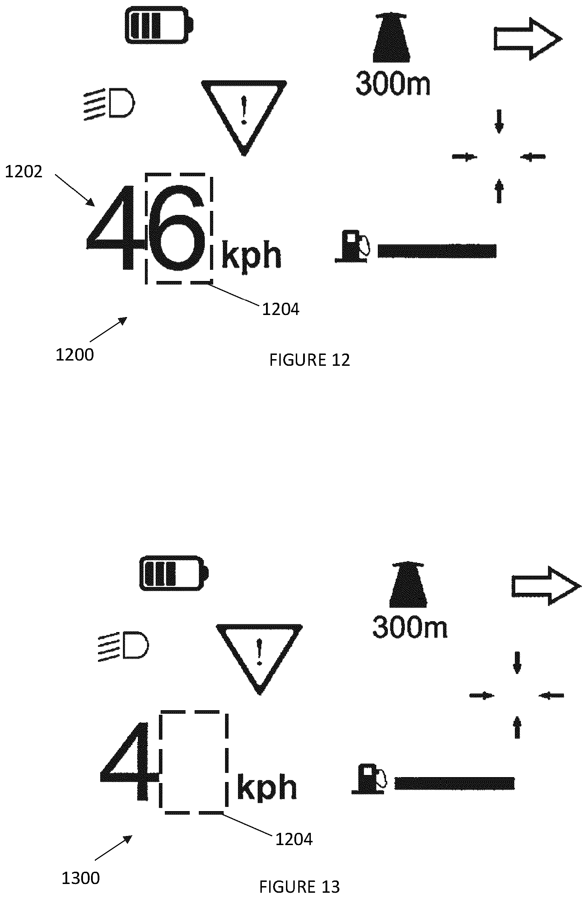

Step 1102 of the method comprises providing a first hologram of a first image 1200. In some examples, the first hologram is calculated using a method as set out in Figure 8. In this example, the first image 1200 is shown in Figure 12. In some examples, the first hologram is a hologram of the entire first image 1200 shown in Figure 12. In other examples, the first hologram is a 1$^{st}$ order hologram of a portion of the first image 1200 (similarly to what is described above). The first image 1200 is an image of a virtual display panel comprising various information for a driver of a vehicle. This includes directional information, and vehicle information such as fuel level and an indication that head lamps of the vehicle are dipped. The first image 1200 also comprises a digital speedometer 1202 indicating that the vehicle is currently travelling at 46 kph. The first hologram is such that, when the first hologram is appropriately illuminated, a holographic reconstruction of the first image may be visible from an eye-box of a holographic projection system. For example, a virtual image of the first image 1200 may be appear several meters away from the driver of a vehicle in an augmented reality arrangement.

Step 1104 of the method comprises propagating a first complex light field corresponding to the first hologram of the first image 1200 from a hologram plane to an image plane, in a fashion similar to what has been described in relation to earlier examples.

Step 1106 of the method comprises modifying amplitudes of the first complex light field in the image plane by setting amplitude components of the first complex light field that correspond to one or more regions of the first image that are to be changed to be zero. This is another way of saying that the method comprises modifying amplitudes of the first complex light field in accordance with a second image 1300 in which said one or more regions are empty / absent of content (relative to the first image 1200). In this example, there is one said region 1204, represented by the dashed rectangle in Figure 12 and 13. Region 1204 consists of the "6" of the digital speedometer 1202 in the first image 1200. Figure 13 shows the second image 1300. In particular, Figure 13 shows how the second image 1300 is identical to the first image 1200 outside of the region 1204. But, inside region 1204, the second image 1300 is empty. In particular, there is no "6" in region 1204 in the second image 1300. Thus, when the amplitudes of the first complex light field are modified in accordance with the second image (at the image plane), the amplitudes corresponding to the region 1204 are set to zero.

Step 1108 of the method comprises propagating the modified first complex light field back from the image plane to the hologram plane thereby obtaining a second hologram (of the second image 1300). So, in step 1108, a hologram is obtained of an image in which region 1204 is empty. If the second hologram (obtained in step 1108) were holographically reconstructed, the holographic reconstruction would comprise an empty area corresponding to region 1204 of the second image 1300.

Step 1110 of the method comprises propagating a second complex light field corresponding to the second hologram from the hologram plane to the image plane, in a fashion similar to what has been described in relation to earlier examples.

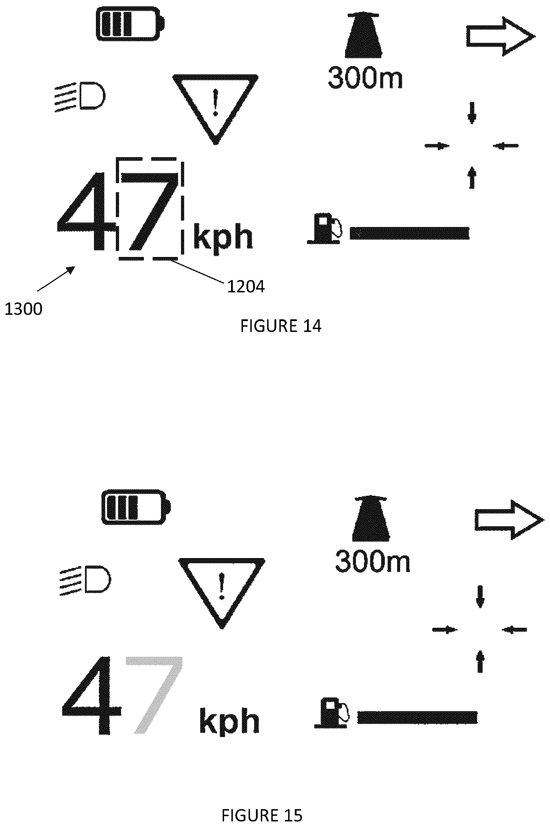

Step 1112 of the method comprises modifying amplitudes of the second complex light field of the second hologram in the image plane by setting amplitude components of the complex light field based on a target corresponding to a third image 1400. The third image 1400 is shown in Figure 14. The third image 1400 is based on the first image 1200. Content outside of the region 1204 in the third image 1400 is identical to the first image 1200 (and to the second image 1200). Content inside of the region 1204 in the third image 1400 is different to the corresponding content in the first image 1200. In particular, the third image 1400 comprises a "7" in the region 1204, rather than a "6". In other words, the digital speedometer 1202 of the third image 1400 displays that the vehicle is travelling 47 kph, rather than 46 kph. Thus, the content in the region 1204 may be described as having been updated / modified or changed from the first image 1200 to the third image 1400. At least some amplitude components of the complex light field corresponding to the region 1204 will be non-zero after step 1112 (unlike in step 1106).

Step 1114 of the method comprises propagating the modified second complex light field back from the image plane to the hologram plane thereby obtaining a third hologram of the third image.

Steps 1102 to 1114 of the method is a fast and efficient means for determining a hologram of a dynamic image, in particular where only a relatively small part of the image is dynamic (e.g. changing with time) and the remainder of the image is relatively constant. In this example, the dynamic image comprises various static information and a dynamic digital speedometer. As used herein, the information being static means that it has not changed from the first image to the third image. Of course, over longer periods of time, the information may change. For example, a fuel level indicator may only change very slowly.

The inventors have found that, after a single iteration (of propagating back and forth between the hologram plane and image plane) as described above, the third hologram may be suitable for holographically reconstructing the third image and the reconstruction may comprise the new / changed / modified content in said one or more regions. However, the inventors have found that, in some examples, it may be possible for a user / viewer to distinguish between changed content and the unchanged content. This is shown in Figure 15. In this example, the changed content (i.e. the "7") appears dimmer than the unchanged content (e.g. the "4").

Thus, in some embodiments, the method optionally further comprises one or more optimization iterations after obtaining the third hologram. In this example, the includes three optimization iterations, as describe below in more detail.

Step 1116 of the method comprises setting the iteration number, i, to one.

Step 1118 of the method comprises receiving an input hologram. When i = 1 (i.e. in the first iteration), the input hologram is the third hologram determined in step 1116. When i > 1, the input hologram is the optimized third hologram obtained at step 1124 in the (i-1)th iteration.

Step 1120 of the method comprises propagating a complex light field corresponding to the input hologram from the hologram plane to the image plane. Step 1122 of the method comprises modifying the amplitudes of the complex light field in the image plane by setting amplitude components of the complex light field based on the target corresponding to the third image. Step 1124 of the method comprises propagating the modified complex light field back from the image plane to the hologram plane to obtain an optimized third hologram. Step 1126 of the method comprises increasing the iteration count (i.e. i = i + 1). When the iteration count reaches a predetermined number (in this example, 3 iterations), the optimized third hologram is output (in step 1128). The inventors have found that the inclusion of three optimization iterations substantially improves the (optimized) third hologram such that the appearance of differences between the quality of the unchanged and changed parts of a holographically reconstructed third hologram are significantly reduced (such that the holographic reconstruction of the optimized third hologram appears like the third image 1400).

The reader will appreciate that the teachings of the present disclosure may be useful in any scenario in which when only a small part of a (target) image is changed - e.g. from one frame to the next. That is, the (target) image is substantially unchanged. The system may therefore comprise a sub-system that identifies a minor change to a (target) image - e.g. a change affecting only a small number of pixels of the (target) image such as less than 10% or less than 5% - and determines a plurality of second (order) holograms from a first (order) hologram of the entire (target) image, wherein each second (order) hologram corresponds to a sub-region of the (target) image.

## Claims

1. A method of determining, from a first hologram of an image, a second hologram of a portion of the image, wherein the image is a first image and the portion of the first image corresponds to a second image, wherein the method is a phase-retrieval method comprising transforming between a hologram plane and a corresponding image plane, the method further comprising:

   providing the first hologram of the image;
   propagating a complex light field corresponding to the first hologram from the hologram plane to the image plane;
   modifying amplitudes of the complex light field in the image plane by setting amplitude components of the complex light field that correspond to regions of the image that are outside of the portion of the image to be zero;
   propagating the modified complex light field back from the image plane to the hologram plane thereby obtaining the second hologram of the portion of the image; and
   determining, from the second hologram, a third hologram of a third image that is based on the first image wherein content in the one or more regions of the first image have been changed, wherein determining the third hologram comprises:

propagating a second complex light field corresponding to the second hologram from the hologram plane to the image plane; modifying amplitudes of the second complex light field in the image plane by setting amplitude components of the second complex light field based on the third image; and propagating the modified second complex light field back from the image plane to the hologram plane thereby obtaining the third hologram of the third image.

2. The method of claim 1, wherein

the method is for a system comprising a display device arranged to display the first hologram and a viewing system arranged to view the first hologram through a pupil expander providing a plurality of light propagation paths from the display device to the viewing system; and providing the first hologram comprises identifying a propagation path of a plurality of possible propagation paths (705) from the display device (701) to the viewing system (713) and performing a plurality of primary iterations of a phase-retrieval algorithm, the phase-retrieval algorithm comprising transforming back and forth between the hologram plane and the image plane, via the respective propagation path, in order to form the first hologram corresponding to the image; optionally wherein the steps of claim 1 is a second iteration of the phase-retrieval algorithm and are only performed once.

3. The method of claim 2, wherein the image plane is at a corresponding sensor plane of a sensor (711) of the viewing system (713), wherein each primary iteration of the plurality of primary iterations of the phase-retrieval algorithm comprises:

a first stage comprising determining a first complex light field at an entrance pupil (707) of the viewing system (713), wherein the first complex light field results from the propagation of light of the image along at a light propagation path of a plurality of light propagation paths (705) of the pupil expander (703) and cropping in accordance with the entrance pupil (707) of the viewing system (713); a second stage comprising determining a second complex light field at the sensor plane of the viewing system, wherein the second complex light field results from the propagation of light of the first complex light field from the entrance pupil (707) through a lens (709) of the viewing system (713) and modification of the amplitude component in accordance with the image, wherein the modification of the amplitude component in accordance with the image comprises replacing the amplitude component of the complex light field with the amplitude component of the target image or an amplitude component based on that of the target image; a third stage comprising determining a third complex light field at the entrance pupil (707), wherein the third complex light field results from the reverse propagation of light of the second complex light field from the sensor plane back through the lens (709) and cropping in accordance with the size and shape of the entrance pupil (707); a fourth stage comprising determining a fourth complex light field at a display plane, wherein the fourth complex light field results from the reverse propagation of light of the third complex light field back along the at least one light propagation of the pupil expander (703) and cropping in accordance with the display device (701); and extracting the first hologram from the fourth complex light field; optionally, wherein the first to fourth stages are iteratively repeated before the step of extracting the first hologram from the final iteration, and the light propagated from the display device (701) for the second and subsequent iterations comprises the phase distribution of the fourth complex light field of the immediately preceding iteration.

4. The method of any preceding claim, wherein propagating the complex light field corresponding to the first hologram from the hologram plane to the image plane comprises a Fresnel transform and/or a Fourier transform; and / or wherein the portion of the image has a smaller field of view than the image.

5. The method of any preceding claim, wherein the step of modifying the amplitudes of the complex light field and the step of propagating back to the hologram plane are performed for each respective portion of the image to determine a plurality of second holograms, where each second hologram is of a respective portion of the image; optionally wherein the plurality of second holograms comprises a second hologram that has a field of view different from a field of view of another second hologram of the plurality of second holograms.

6. A method of forming a composite hologram of an image from a first hologram of the image, the method comprising performing the method of claim 5 on the first hologram to obtain a plurality of second holograms; and

summing the plurality of second holograms in complex optical field in the hologram domain to obtain the composite hologram.

7. The method of claim 6, further comprising:

receiving an update to at least a portion of the image;
forming an updated second hologram based on the updated portion;
identifying at least one of the second holograms that corresponds to the updated portion;
replacing the identified second holograms in the plurality of second holograms with the updated second hologram to obtain an updated plurality of second holograms; and
summing the updated plurality of second holograms to obtain an updated composite hologram.

8. A hologram engine comprising:

a processor;
a storage medium storing processor-implementable instructions for controlling a processor to carry out the method any of preceding method claim;
a display device (701) configured to display at least the second hologram; and
a pupil expander (703) arranged such that the second hologram is viewable through the pupil expander (703).

9. A method of controlling light propagation in a light engine, to form an image visible from a viewing window, wherein the light engine comprises a display device (701) and a pupil expander (703), the method comprising:

performing the method of any of claim 1 to claim 7 on a first hologram of the image to determine a composite hologram, wherein the composite hologram is of the image and is formed of a plurality of second holograms produced by the method of any of claim 1 to claim 7;
displaying, on the display device (701), the composite hologram of the image;
illuminating the display device (701) to spatially modulate light in accordance with the composite hologram, wherein the composite hologram is configured to angularly distribute the spatially modulated light of the image in accordance with position of image content, such that angular channels of the spatially modulated light correspond with the respective portions of the image;
arranging the pupil expander (703) to receive the spatially modulated light and to provide a respective plurality of different light propagation paths (705) for the spatially modulated light from the display device (701) to the viewing window; and
controlling propagation of the plurality of different light propagation paths (705) using a control device disposed between the pupil expander (703) and the viewing window, wherein the control device comprises at least one aperture;
wherein the step of controlling propagation of the plurality of different light propagation paths (705) comprises configuring the control device so that a first viewing position within the viewing window receives a first channel of light spatially modulated by the composite hologram in accordance with a portion of the image and a second viewing position within the viewing window receives a second channel of light spatially modulated by the composite hologram in accordance with another portion of the image.

10. The method of claim 9, further comprises determining width of the at least one aperture;

wherein one of the second holograms used to form the composite hologram has a field of view corresponding to the width of the at least one aperture; and / or
wherein the step of configuring the control device comprises allowing transmission of light through a first portion of the control device and preventing transmission of light through a second, different portion of the control device; and / or.
wherein the pupil expander (703) comprises a plurality of transmission points, and wherein each of the plurality of different light propagation paths (705) is transmitted from a different respective transmission point.

11. The method of claim 10, further comprising:

i. identifying a first transmission point from which light of a first angular channel would propagate to the first viewing position, in the absence of the control device;
ii. identifying a second, different transmission point from which light of the first angular channel would propagate to the second viewing position, in the absence of the control device; and
iii. configuring the control device to block either a light path of the first angular channel to the first viewing position or a light path of the first angular channel to the second viewing position, at a selected time (t); and, optionally, alternately blocking the light path of the first angular channel to the first viewing position and blocking the light path of the first angular channel to the second viewing position, during a selected time period.

12. A light engine arranged to form an image visible from a viewing window, wherein the light engine comprises:

a processor;

a storage medium storing processor-implementable instructions for controlling a processor to carry out the method of claim 9 or any claims dependent thereon to obtain a composite hologram of the image;

a display device (701) arranged to display the composite hologram of the image and spatially modulate light in accordance with the composite hologram, wherein the composite hologram is configured to angularly distribute spatially modulated light in accordance with position of image content, such that angular channels of the spatially modulated light correspond with respective portions of the image;

a pupil expander (703) arranged to receive the spatially modulated light and provide a plurality of different light propagation paths (705) for the spatially modulated light from the display device (701) to the viewing window; and

a control device disposed between the pupil expander (703) and the viewing window, wherein the control device comprises at least one aperture arranged such that a first viewing position within the viewing window receives a first channel of light spatially modulated by the composite hologram in accordance with a portion of the image and a second viewing position within the viewing window receives a second channel of light spatially modulated by the composite hologram in accordance with another portion of the image.

13. The light engine of claim 12, wherein:

the control device is further configured to determine width of the at least one aperture;

wherein one of the second holograms used to form the composite hologram has a field of view corresponding to the width of the at least one aperture.

## Patentansprüche

1. Verfahren zum Bestimmen, aus einem ersten Hologramm eines Bilds, eines zweiten Hologramms eines Teils des Bilds, wobei das Bild ein erstes Bild ist und der Teil des ersten Bilds einem zweiten Bild entspricht, wobei das Verfahren ein Phasenwiedergewinnungsverfahren ist, das Transformieren zwischen einer Hologrammebene und einer entsprechenden Bildebene umfasst, wobei das Verfahren weiter Folgendes umfasst:

Bereitstellen des ersten Hologramms des Bilds;

Ausbreiten eines komplexen Lichtfelds, das dem ersten Hologramm entspricht, von der Hologrammebene zur Bildebene;

Modifizieren von Amplituden des komplexen Lichtfelds in der Bildebene, indem Amplitudenkomponenten des komplexen Lichtfelds, die den Bereichen des Bilds entsprechen, die außerhalb des Bildabschnitts liegen, auf Null gesetzt werden;

Ausbreiten des modifizierten komplexen Lichtfelds zurück von der Bildebene zur Hologrammebene, wodurch das zweite Hologramm des Bildabschnitts erhalten wird; und

Bestimmen, aus dem zweiten Hologramm, eines dritten Hologramms eines dritten Bilds, das auf dem ersten Bild basiert, wobei Inhalte in einem oder mehreren Bereichen des ersten Bilds geändert wurden, wobei Bestimmen des dritten Hologramms Folgendes umfasst:

Ausbreiten eines zweiten komplexen Lichtfelds, das dem zweiten Hologramm entspricht, von der Hologrammebene zur Bildebene;

Modifizieren von Amplituden des zweiten komplexen Lichtfelds in der Bildebene, indem Amplitudenkomponenten des zweiten komplexen Lichtfelds basierend auf dem dritten Bild eingestellt werden; und

Ausbreiten des modifizierten zweiten komplexen Lichtfelds zurück von der Bildebene zur Hologrammebene, wodurch das dritte Hologramm des dritten Bilds erhalten wird.

2. Verfahren nach Anspruch 1, wobei

das Verfahren für ein System ist, das eine Anzeigevorrichtung umfasst, die dazu angeordnet ist, das erste Hologramm anzuzeigen, und ein Betrachtungssystem umfasst, das dazu angeordnet ist, das erste Hologramm durch einen Pupillenexpander zu betrachten, der eine Vielzahl von Lichtausbreitungswegen von der Anzeigevorrichtung zum Betrachtungssystem bereitstellt; und

Bereitstellen des ersten Hologramms Identifizieren eines Ausbreitungswegs aus einer Vielzahl von möglichen Ausbreitungswegen (705) von der Anzeigevorrichtung (701) zum Betrachtungssystem (713) und Durchführen einer Vielzahl von primären Iterationen eines Phasenwiedergewinnungsalgorithmus umfasst, wobei der Phasenwiedergewinnungsalgorithmus reziprokes Transformieren zwischen der Hologrammebene und der Bildebene über den jeweiligen Ausbreitungsweg umfasst, um das erste Hologramm zu bilden, das dem Bild entspricht; wobei die Schritte von Anspruch 1 optional eine zweite Iteration des Phasenwiedergewinnungsalgorithmus sind und nur einmal durchgeführt werden.

3. Verfahren nach Anspruch 2, wobei die Bildebene auf einer entsprechenden Sensorebene eines Sensors (711) des Betrachtungssystems (713) liegt, wobei jede primäre Iteration der Vielzahl von primären Iterationen des Phasenwiedergewinnungsalgorithmus Folgendes umfasst:

eine erste Stufe, die Bestimmen eines ersten komplexen Lichtfelds an einer Eintrittspupille (707) des Betrachtungssystems (713) umfasst, wobei das erste komplexe Lichtfeld aus der Ausbreitung von Licht des Bilds entlang eines Lichtausbreitungswegs aus einer Vielzahl von Lichtausbreitungswegen (705) des Pupillenexpanders (703) und einem Zuschneiden entsprechend der Eintrittspupille (707) des Betrachtungssystems (713) resultiert; eine zweite Stufe, die Bestimmen eines zweiten komplexen Lichtfelds auf der Sensorebene des Betrachtungssystems umfasst, wobei das zweite komplexe Lichtfeld aus der Ausbreitung von Licht des ersten komplexen Lichtfelds von der Eintrittspupille (707) durch eine Linse (709) des Betrachtungssystems (713) und einer Modifikation der Amplitudenkomponente in Übereinstimmung mit dem Bild resultiert, wobei die Modifikation der Amplitudenkomponente in Übereinstimmung mit dem Bild Ersetzen der Amplitudenkomponente des komplexen Lichtfelds durch die Amplitudenkomponente des Zielbilds oder eine Amplitudenkomponente, die auf der des Zielbilds basiert, umfasst; eine dritte Stufe, die Bestimmen eines dritten komplexen Lichtfelds an der Eintrittspupille (707) umfasst, wobei das dritte komplexe Lichtfeld aus der Rückwärtsausbreitung von Licht des zweiten komplexen Lichtfelds von der Sensorebene zurück durch die Linse (709) und einem Zuschneiden in Übereinstimmung mit der Größe und Form der Eintrittspupille (707) resultiert; eine vierte Stufe, die Bestimmen eines vierten komplexen Lichtfelds auf einer Anzeigeebene umfasst, wobei das vierte komplexe Lichtfeld aus der Rückwärtsausbreitung von Licht des dritten komplexen Lichtfelds zurück entlang der mindestens einen Lichtausbreitung des Pupillenexpanders (703) und einem Zuschneiden in Übereinstimmung mit der Anzeigevorrichtung (701) resultiert; und Extrahieren des ersten Hologramms aus dem vierten komplexen Lichtfeld; wobei optional die erste bis vierte Stufe vor dem Schritt zum Extrahieren des ersten Hologramms aus der letzten Iteration iterativ wiederholt werden, und das von der Anzeigevorrichtung (701) für die zweite und die folgenden Iterationen ausgebreitete Licht die Phasenverteilung des vierten komplexen Lichtfelds der unmittelbar vorhergehenden Iteration umfasst.

4. Verfahren nach einem vorstehenden Anspruch, wobei Ausbreiten des komplexen Lichtfelds, das dem ersten Hologramm entspricht, von der Hologrammebene zur Bildebene eine Fresnel-Transformation und/oder eine Fourier-Transformation umfasst; und/oder wobei der Teil des Bilds ein kleineres Sichtfeld als das Bild aufweist.

5. Verfahren nach einem vorstehenden Anspruch, wobei der Schritt zum Modifizieren der Amplituden des komplexen Lichtfelds und der Schritt zum Rückwärtsausbreiten zur Hologrammebene für jeden jeweiligen Teil des Bilds durchgeführt werden, um eine Vielzahl von zweiten Hologrammen zu bestimmen, wobei jedes zweite Hologramm einen jeweiligen Teil des Bilds darstellt; wobei die Vielzahl von zweiten Hologrammen optional ein zweites Hologramm umfasst, das ein Sichtfeld aufweist, das sich von dem Sichtfeld eines anderen zweiten Hologramms der Vielzahl von zweiten Hologrammen unterscheidet.

6. Verfahren zum Bilden eines zusammengesetzten Hologramms eines Bilds aus einem ersten Hologramm des Bilds, wobei das Verfahren Durchführen des Verfahrens nach Anspruch 5 an dem ersten Hologramm umfasst, um eine Vielzahl von zweiten Hologrammen zu erhalten; und Summieren der Vielzahl von zweiten Hologrammen im komplexen optischen Feld im Hologrammbereich, um das zusammengesetzte Hologramm zu erhalten.

7. Verfahren nach Anspruch 6, das weiter Folgendes umfasst:

Empfangen einer Aktualisierung für mindestens einen Teil des Bilds; Bilden eines aktualisierten zweiten Hologramms basierend auf dem aktualisierten Teil; Identifizieren von mindestens einem der zweiten Hologramme, das dem aktualisierten Teil entspricht; Ersetzen der identifizierten zweiten Hologramme in der Vielzahl von zweiten Hologrammen durch das aktualisierte zweite Hologramm, um eine aktualisierte Vielzahl von zweiten Hologrammen zu erhalten; und

Summieren der aktualisierten Vielzahl von zweiten Hologrammen, um ein aktualisiertes zusammengesetztes Hologramm zu erhalten.

8. Hologramm-Maschine, die Folgendes umfasst:

einen Prozessor;
ein Speichermedium, das prozessorimplementierbare Anweisungen zum Steuern eines Prozessors speichert, um das Verfahren nach einem vorstehenden Verfahrensanspruch auszuführen;
eine Anzeigevorrichtung (701), die dazu konfiguriert ist, mindestens das zweite Hologramm anzuzeigen; und
einen Pupillenexpander (703), der so angeordnet ist, dass das zweite Hologramm durch den Pupillenexpander (703) sichtbar ist.

9. Verfahren zum Steuern der Lichtausbreitung in einer Lichtmaschine, um ein Bild zu bilden, das aus einem Sichtfenster sichtbar ist, wobei die Lichtmaschine eine Anzeigevorrichtung (701) und einen Pupillenexpander (703) umfasst, wobei das Verfahren Folgendes umfasst:

Durchführen des Verfahrens nach einem von Anspruch 1 bis Anspruch 7 an einem ersten Hologramm des Bilds, um ein zusammengesetztes Hologramm zu bestimmen, wobei das zusammengesetzte Hologramm das Bild darstellt und aus einer Vielzahl von zweiten Hologrammen gebildet wird, die durch das Verfahren nach einem von Anspruch 1 bis Anspruch 7 erzeugt wurden;
Anzeigen, auf der Anzeigevorrichtung (701), des zusammengesetzten Hologramms des Bilds;
Beleuchten der Anzeigevorrichtung (701), um das Licht in Übereinstimmung mit dem zusammengesetzten Hologramm räumlich zu modulieren, wobei das zusammengesetzte Hologramm dazu konfiguriert ist, das räumlich modulierte Licht des Bilds in Übereinstimmung mit einer Position von Bildinhalten winkelmäßig zu verteilen, so dass Winkelkanäle des räumlich modulierten Lichts den jeweiligen Teilen des Bilds entsprechen;
Anordnen des Pupillenexpanders (703), das räumlich modulierte Licht zu empfangen und eine jeweilige Vielzahl von unterschiedlichen Lichtausbreitungswegen (705) für das räumlich modulierte Licht von der Anzeigevorrichtung (701) zum Sichtfenster bereitzustellen; und

Steuern der Ausbreitung der Vielzahl unterschiedlicher Lichtausbreitungswege (705) unter Verwendung einer Steuervorrichtung, die zwischen dem Pupillenexpander (703) und dem Sichtfenster angeordnet ist, wobei die Steuervorrichtung mindestens eine Blende umfasst;
wobei der Schritt zum Steuern einer Ausbreitung der Vielzahl von unterschiedlichen Lichtausbreitungswegen (705) Konfigurieren der Steuervorrichtung umfasst, so dass eine erste Sichtposition innerhalb des Sichtfensters einen ersten Lichtkanal empfängt, der durch das zusammengesetzte Hologramm in Übereinstimmung mit einem Teil des Bilds räumlich moduliert wird, und eine zweite Sichtposition innerhalb des Sichtfensters einen zweiten Lichtkanal empfängt, der durch das Hologramm in Übereinstimmung mit einem anderen Teil des Bilds räumlich moduliert wird.

10. Verfahren nach Anspruch 9, das weiter Bestimmen einer Breite der mindestens einen Blende umfasst;

wobei eines der zweiten Hologramme, die zum Bilden des zusammengesetzten Hologramms verwendet werden, ein Sichtfeld aufweist, das der Breite der mindestens einen Blende entspricht; und/oder
wobei der Schritt zum Konfigurieren der Steuervorrichtung Zulassen einer Übertragung von Licht durch einen ersten teil der Steuervorrichtung und Verhindern einer Übertragung von Licht durch einen zweiten, unterschiedlichen Teil der Steuervorrichtung umfasst; und/oder
wobei der Pupillenexpander (703) eine Vielzahl von Übertragungspunkten umfasst, und wobei jeder der Vielzahl von unterschiedlichen Lichtausbreitungswegen (705) von einem unterschiedlichen jeweiligen Übertragungspunkt aus übertragen wird.

11. Verfahren nach Anspruch 10, das weiter Folgendes umfasst:

i. Identifizieren eines ersten Übertragungspunkts, von dem aus sich Licht eines ersten Winkelkanals zur ersten Sichtposition ausbreiten würde, wenn die Steuervorrichtung nicht vorhanden wäre;
ii. Identifizieren eines zweiten, unterschiedlichen Übertragungspunkts, von dem aus sich Licht des ersten Winkelkanals zur zweiten Sichtposition ausbreiten würde, wenn die Steuervorrichtung nicht vorhanden wäre; und
iii. Konfigurieren der Steuervorrichtung, um zu einem ausgewählten Zeitpunkt (t) entweder einen Lichtweg des ersten Winkelkanals zur ersten Betrachtungsposition oder einen Lichtweg des ersten Winkelkanals zur zweiten Betrachtungsposition zu blockieren; und optional abwechselndes Blockieren des Lichtwegs des ersten Winkelkanals zur ersten Betrachtungsposition und Blockieren des Lichtwegs des ersten Winkelkanals zur zweiten Betrachtungsposition während eines ausgewählten Zeitraums.

12. Lichtmaschine, die dazu angeordnet ist, ein Bild zu bilden, das von einem Sichtfenster aus sichtbar ist, wobei die Lichtmaschine Folgendes umfasst:

einen Prozessor;
ein Speichermedium, das prozessorimplementierbare Anweisungen zum Steuern eines Prozessors speichert, um das Verfahren nach Anspruch 9 oder einem beliebigen davon abhängigen Anspruch auszuführen, um ein zusammengesetztes Hologramm des Bilds zu erhalten;
eine Anzeigevorrichtung (701) die dazu angeordnet ist, das zusammengesetzte Hologramm des Bilds anzuzeigen und das Licht in Übereinstimmung mit dem zusammengesetzten Hologramm räumlich zu modulieren, wobei das zusammengesetzte Hologramm dazu konfiguriert ist, räumlich moduliertes Licht in Übereinstimmung mit einer Position von Bildinhalten winkelmäßig zu verteilen, so dass Winkelkanäle des räumlich modulierten Lichts jeweiligen Teilen des Bilds entsprechen;
einen Pupillenexpander (703), der dazu angeordnet ist, das räumlich modulierte Licht zu empfangen und eine Vielzahl von unterschiedlichen Lichtausbreitungswegen (705) für das räumlich modulierte Licht von der Anzeigevorrichtung (701) zum Sichtfenster bereitzustellen; und
eine Steuerungsvorrichtung, die zwischen dem Pupillenexpander (703) und dem Sichtfenster angeordnet ist, wobei die Steuerungsvorrichtung mindestens eine Blende umfasst, die so angeordnet ist, dass eine erste Sichtposition innerhalb des Sichtfensters einen ersten Lichtkanal empfängt, der durch das zusammengesetzte Hologramm in Übereinstimmung mit einem Teil des Bilds räumlich moduliert wird, und eine zweite Sichtposition innerhalb des Sichtfensters einen zweiten Lichtkanal empfängt, der durch das Hologramm in Übereinstimmung mit einem anderen Teil des Bilds räumlich moduliert wird.

13. Lichtmaschine nach Anspruch 12, wobei:

die Steuerungsvorrichtung weiter dazu konfiguriert ist, eine Breite der mindestens einen Blende zu bestimmen;
wobei eines der zweiten Hologramme, die zum Bilden des zusammengesetzten Hologramms verwendet werden, ein Sichtfeld aufweist, das der Breite der mindestens einen Blende entspricht.

## Revendications

1. Procédé de détermination, à partir d'un premier hologramme d'une image, d'un deuxième hologramme d'une portion de l'image, dans lequel l'image est une première image et la portion de la première image correspondant à une deuxième image, dans lequel le procédé est un procédé de récupération de phase comprenant une transformation entre un plan d'hologramme et un plan d'image correspondant, le procédé comprenant en outre :

la fourniture du premier hologramme de l'image ;
la propagation d'un champ lumineux complexe correspondant au premier hologramme du plan d'hologramme au plan d'image ;
la modification d'amplitudes du champ lumineux complexe dans le plan d'image en définissant des composantes d'amplitude du champ lumineux complexe qui correspondent à des régions de l'image qui sont à l'extérieur de la portion de l'image à zéro ;
la repropagation du champ lumineux complexe modifié du plan d'image au plan d'hologramme, obtenant ainsi le deuxième hologramme de la portion de l'image ; et
la détermination, à partir du deuxième hologramme, d'un troisième hologramme d'une troisième image qui est basée sur la première image, dans lequel du contenu dans l'une ou les plusieurs régions de la première image a été changé, dans lequel la détermination du troisième hologramme consiste à :

la propagation d'un deuxième champ lumineux complexe correspondant au deuxième hologramme du plan d'hologramme au plan d'image ;
la modification d'amplitudes du deuxième champ lumineux complexe dans le plan d'image en définissant des composantes d'amplitude du deuxième champ lumineux complexe sur la base de la troisième image ; et
la repropagation du deuxième champ lumineux complexe modifié du plan d'image au plan d'hologramme, obtenant ainsi le troisième hologramme de la troisième image.

2. Procédé selon la revendication 1, dans lequel

le procédé concerne un système comprenant un dispositif d'affichage agencé pour afficher le premier hologramme et un système de visualisation agencé pour visualiser le premier hologramme à travers un dilatateur de pupille fournissant une pluralité de trajets de propagation de lumière du dispositif d'affichage au système de visualisation ; et

la fourniture du premier hologramme comprend l'identification d'un trajet de propagation d'une pluralité de trajets de propagation possibles (705) du dispositif d'affichage (701) au système de visualisation (713) et la réalisation d'une pluralité d'itérations primaires d'un algorithme de récupération de phase, l'algorithme de récupération de phase comprenant une transformation aller-retour entre le plan d'hologramme et le plan d'image, par l'intermédiaire du trajet de propagation respectif, afin de former le premier hologramme correspondant à l'image ; facultativement dans lequel les étapes selon la revendication 1 sont une deuxième itération de l'algorithme de récupération de phase et sont effectuées une seule fois.

3. Procédé selon la revendication 2, dans lequel le plan d'image est au niveau d'un plan de capteur correspondant d'un capteur (711) du système de visualisation (713), dans lequel

chaque itération primaire de la pluralité d'itérations primaires de l'algorithme de récupération de phase comprend :

une première étape comprenant la détermination d'un premier champ lumineux complexe au niveau d'une pupille d'entrée (707) du système de visualisation (713), dans lequel le premier champ lumineux complexe résulte de la propagation de lumière de l'image le long d'un trajet de propagation de lumière d'une pluralité de trajets de propagation de lumière (705) du dilatateur de pupille (703) et du recadrage conformément à la pupille d'entrée (707) du système de visualisation (713) ;

une deuxième étape comprenant la détermination d'un deuxième champ lumineux complexe au niveau du plan de capteur du système de visualisation, dans lequel le deuxième champ lumineux complexe résulte de la propagation de lumière du premier champ lumineux complexe de la pupille d'entrée (707) à travers une lentille (709) du système de visualisation (713) et la modification de la composante d'amplitude conformément à l'image, dans lequel la modification de la composante d'amplitude conformément à l'image comprend le remplacement de la composante d'amplitude du champ lumineux complexe par la composante d'amplitude de l'image cible ou une composante d'amplitude basée sur celle de l'image cible ;

une troisième étape comprenant la détermination d'un troisième champ lumineux complexe au niveau de la pupille d'entrée (707), dans lequel le troisième champ lumineux complexe résulte de la propagation inverse de lumière du deuxième champ lumineux complexe du plan de capteur à travers la lentille (709) et du recadrage conformément à la taille et la forme de la pupille d'entrée (707) ;

une quatrième étape comprenant la détermination d'un quatrième champ lumineux complexe sur un plan d'affichage, dans lequel le quatrième champ lumineux complexe résulte de la propagation inverse de lumière du troisième champ lumineux complexe le long de l'au moins une propagation de lumière du dilatateur de pupille (703) et du recadrage conformément au dispositif d'affichage (701) ; et

l'extraction du premier hologramme du quatrième champ lumineux complexe ;

facultativement, dans lequel les première à quatrième étapes sont répétées de manière itérative avant l'étape d'extraction du premier hologramme de l'itération finale, et la lumière propagée du dispositif d'affichage (701) pour la deuxième itération et des itérations suivantes comprend la distribution de phase du quatrième champ lumineux complexe de l'itération immédiatement précédente.

4. Procédé selon une quelconque revendication précédente, dans lequel la propagation du champ lumineux complexe correspondant au premier hologramme du plan d'hologramme au plan d'image comprend une transformée de Fresnel et/ou une transformée de Fourier ; et/ou dans lequel la portion de l'image présente un champ de vision plus petit que l'image.

5. Procédé selon une quelconque revendication précédente, dans lequel l'étape de modification des amplitudes du champ lumineux complexe et l'étape de repropagation vers le plan d'hologramme sont effectuées pour chaque portion respective de l'image pour déterminer une pluralité de deuxièmes hologrammes, où chaque deuxième hologramme est d'une portion respective de l'image ; facultativement dans lequel la pluralité de deuxièmes hologrammes comprend un deuxième hologramme qui présente un champ de vision différent d'un champ de vision d'un autre deuxième hologramme de la pluralité de deuxièmes hologrammes.

6. Procédé de formation d'un hologramme composite d'une image à partir d'un premier hologramme de l'image, le procédé comprenant la réalisation du procédé selon la revendication 5 sur le premier hologramme pour obtenir une pluralité de deuxièmes hologrammes ; et
l'addition de la pluralité de deuxièmes hologrammes dans un champ optique complexe dans le domaine d'hologramme pour obtenir l'hologramme composite.

7. Procédé selon la revendication 6, comprenant en outre :

la réception d'une mise à jour d'au moins une portion de l'image ;
la formation d'un deuxième hologramme mis à jour sur la base de la portion mise à jour ;
l'identification d'au moins un des deuxièmes hologrammes qui correspond à la portion mise à jour ;
le remplacement des deuxièmes hologrammes identifiés dans la pluralité de deuxièmes hologrammes par le deuxième hologramme mis à jour pour obtenir une pluralité mise à jour de deuxièmes hologrammes ; et
l'addition de la pluralité mise à jour de deuxièmes hologrammes pour obtenir un hologramme composite mis à jour.

8. Moteur d'hologramme comprenant :

un processeur;
un support de stockage stockant des instructions pouvant être mises en œuvre par un processeur pour commander un processeur pour mettre en œuvre le procédé selon une quelconque revendication précédente ;
un dispositif d'affichage (701) configuré pour afficher au moins le deuxième hologramme ; et
un dilatateur de pupille (703) agencé de sorte que le deuxième hologramme est visible à travers le dilatateur de pupille (703).

9. Procédé de commande de propagation de lumière dans un moteur de lumière, pour former une image visible d'une fenêtre de visualisation, dans lequel le moteur de lumière comprend un dispositif d'affichage (701) et un dilatateur de pupille (703), le procédé comprenant :

la réalisation du procédé selon l'une quelconque des revendications 1 à 7 sur un premier hologramme de l'image pour déterminer un hologramme composite, dans lequel l'hologramme composite est de l'image et est formé d'une pluralité de deuxièmes hologrammes produits par le procédé selon l'une quelconque des revendications 1 à 7 ;
l'affichage, sur le dispositif d'affichage (701), d'un hologramme composite de l'image;
l'illumination du dispositif d'affichage (701) pour moduler spatialement de la lumière conformément à l'hologramme composite, dans lequel l'hologramme composite est configuré pour distribuer angulairement la lumière modulée spatialement de l'image conformément à la position du contenu d'image, de sorte que des canaux angulaires de la lumière modulée spatialement correspondent à des portions respectives de l'image ;
l'agencement du dilatateur de pupille (703) pour recevoir la lumière modulée spatialement et pour fournir une pluralité respective de trajets de propagation de lumière différents (705) pour la lumière modulée spatialement du dispositif d'affichage (701) à la fenêtre de visualisation ; et
la commande de la propagation de la pluralité de trajets de propagation de lumière différents (705) en utilisant un dispositif de commande disposé entre le dilatateur de pupille (703) et la fenêtre de visualisation, dans lequel le dispositif de commande comprend au moins une ouverture ;
dans lequel l'étape de commande de propagation de la pluralité de trajets de propagation de lumière différents (705) comprend la configuration du dispositif de commande de sorte qu'une première position de visualisation au sein de la fenêtre de visualisation reçoit un premier canal de lumière modulé spatialement par l'hologramme composite conformément à une première portion de l'image et une deuxième position de visualisation au sein de la fenêtre de visualisation reçoit un deuxième canal de lumière modulée spatialement par l'hologramme composite conformément à une autre portion de l'image.

10. Procédé selon la revendication 9, comprenant en outre la détermination de largeur de l'au moins une ouverture ;

dans lequel un des deuxièmes hologrammes utilisés pour former l'hologramme composite présente un champ de vision correspondant à la largeur de l'au moins une ouverture ; et/ou
dans lequel l'étape de la configuration du dispositif de commande comprend l'autorisation de transmission de lumière à travers une première portion du dispositif de commande et l'interdiction de transmission de lumière à travers une deuxième portion différente du dispositif de commande ; et/ou
dans lequel le dilatateur de pupille (703) comprend une pluralité de points de transmission, et dans lequel chacun de la pluralité de trajets de propagation de lumière différents (705) est transmis d'un point de transmission respectif différent.

**11.** Procédé selon la revendication 10, comprenant en outre :

> i. l'identification d'un premier point de transmission à partir duquel de la lumière d'un premier canal angulaire se propagerait vers la première position de visualisation, en l'absence du dispositif de commande ;
> ii. l'identification d'un deuxième point de transmission différent à partir duquel de la lumière du premier canal angulaire se propagerait vers la deuxième position de visualisation, en l'absence du dispositif de commande ; et
> iii. la configuration du dispositif de commande pour bloquer soit un trajet lumineux du premier canal angulaire vers la première position de visualisation, soit un trajet lumineux du premier canal angulaire vers la deuxième position de visualisation, à un instant sélectionné (t) ; et, facultativement, le blocage alternatif du trajet lumineux du premier canal angulaire vers la première position de visualisation et le blocage du trajet lumineux du premier canal angulaire vers la deuxième position de visualisation, pendant une période de temps sélectionnée.

**12.** Moteur de lumière agencé pour former une image visible d'une fenêtre de visualisation, dans lequel le moteur de lumière comprend :

> un processeur;
> un support de stockage stockant des instructions pouvant être mises en œuvre par un processeur pour commander un processeur pour mettre en œuvre le procédé selon la revendication 9 ou toute revendication qui en dépend pour obtenir un hologramme composite de l'image ;
> un dispositif d'affichage (701) agencé pour afficher l'hologramme composite de l'image et moduler spatialement de la lumière conformément à l'hologramme composite, dans lequel l'hologramme composite est configuré pour distribuer angulairement de la lumière modulée spatialement conformément à la position de contenu d'image, de sorte que des canaux angulaires de la lumière modulée spatialement correspondent à des portions respectives de l'image ;
> un dilatateur de pupille (703) agencé pour recevoir la lumière modulée spatialement et fournir une pluralité de trajets de propagation de lumière différents (705) pour la lumière modulée spatialement du dispositif d'affichage (701) à la fenêtre de visualisation ; et
> un dispositif de commande disposé entre le dilatateur de pupille (703) et la fenêtre de visualisation, dans lequel le dispositif de commande comprend au moins une ouverture agencée de sorte qu'une première position de visualisation au sein de la fenêtre de visualisation reçoit un premier canal de lumière modulée spatialement par l'hologramme composite conformément à une portion de l'image et une deuxième position de visualisation au sein de la fenêtre de visualisation reçoit un deuxième canal de lumière modulée spatialement par l'hologramme composite conformément à une autre portion de l'image.

**13.** Moteur de lumière selon la revendication 12, dans lequel :

> le dispositif de commande est en outre configuré pour déterminer la largeur de l'au moins une ouverture ;
> dans lequel un des deuxièmes hologrammes utilisés pour former l'hologramme composite présente un champ de vision correspondant à la largeur de l'au moins une ouverture.

FIGURE 1

FIGURE 2A

FIGURE 2B

FIGURE 2C

FIGURE 3

EP 4 339 712 B1

FIGURE 4

41

FIGURE 5A

502'  504'  506'

501'

504'

506'

FIGURE 5B

FIGURE 6A

FIGURE 6B

FIGURE 7

**802**
random phase seed

**804**
Set amplitude = 1 or actual illumination

**806**
Fresnel propagate from SLM to complex hologram plane for each number of bounces
e.g. $SLM_0$ (straight through slab)
$SLM_1$ (2 reflections in slab)
$SLM_2$ (4 reflections in slab)
... $SLM_n$ (2n reflections in slab)
*(taking account of lateral positions for each SLM replica along x at the complex hologram plane, and phase shifts on reflection for each propagation path)*

**808**
crop complex hologram to lens aperture (pupil)

**810**
Fresnel propagate to sensor (retina) plane (assuming lens position for the target VID)

**812**
Set amplitude = target (or weighted) at sensor plane for this VID

**814**
Fresnel propagate back to complex hologram plane

**816**
Fresnel propagate from complex hologram plane to SLM plane for each

**818**
crop to SLM area and position

**820**
extract kinoform

FIGURE 8

902

904

FIGURE 9

FIGURE 10A

FIGURE 10B

FIGURE 10C

FIGURE 10D

FIGURE 10E

FIGURE 10F

1102

1104

1106

1110

1112

1114

1116

1128

If i ≤ 3

Yes

No

1118

1120

1122

1124

1126

FIGURE 11

1202

46 kph

1204

1200

FIGURE 12

300m

1204

1300

FIGURE 13

300m

300m

47 kph

1204

1300

FIGURE 14

300m

47 kph

FIGURE 15

**REFERENCES CITED IN THE DESCRIPTION**

**Patent documents cited in the description**

- WO 2022167492 A1
- WO 2011114143 A1
- US 2021055691 A1
- US 10514658 B
- GB 2498170 A
- WO 2501112 A
- GB 2108456 A
- GB 2112213 A